# EUROPEAN PATENT APPLICATION

(11) **EP 4 593 466 A1**
(43) Date of publication of application: **30.07.2025**
(21) Application number: 24824945.0
(22) Date of filing: 21.03.2024
(51) Int. Cl.: H04W 36/36

(54) **REDIRECTION CONTROL METHOD, TERMINAL DEVICE, AND STORAGE MEDIUM**

(30) Priority: 21.06.2023 CN 202310739413
(71) Applicant: Honor Device Co., Ltd., Shenzhen, Guangdong 518040 (CN)
(72) Inventor: WEI, Zhenrong, Shenzhen, Guangdong 518040 (CN); HAO, Xuhuan, Shenzhen, Guangdong 518040 (CN); WANG, Yi, Shenzhen, Guangdong 518040 (CN)
(74) Representative: Goddar, Heinz J.
(86) International application number: PCT/CN2024/083021
(87) International publication number: WO 2024/260043

(57) **Abstract**

The present application relates to the field of communication, and provides a method for controlling a redirection, a terminal device, and a storage medium. When the terminal device runs a first application, in a case of detecting that a number of times of a failure of the terminal device redirected from a first network to a second network reaches a first threshold, in first inhibition duration, the terminal device is inhibited from being redirected from the first network to the second network. When the terminal device runs a second application, in a case of detecting that the number of times of the failure of the terminal device redirected from the first network to the second network reaches a second threshold, in second inhibition duration, the terminal device is inhibited from being redirected from the first network to the second network. According to the present application, different inhibition conditions can be determined according to types of applications run on the terminal device, and the redirection failure of the terminal device is inhibited according to the inhibition conditions corresponding to the applications, such that frequent redirections from the first network to the second network is avoided when the terminal device runs the applications, and the problem of data service lags caused by frequent network switching is solved.

## Description

### CROSS-REFERENCE TO RELATED APPLICATIONS

The present application claims priority to Chinese Patent Application No. 202310739413.0, filed with the China National Intellectual Property Administration on June 21, 2023 and entitled "METHOD FOR CONTROLLING REDIRECTION, TERMINAL DEVICE, AND STORAGE MEDIUM", which is incorporated herein by reference in its entirety.

### TECHNICAL FIELD

The present application relates to the field of wireless communication, and in particular to a method for controlling a redirection, a terminal device, and a storage medium.

### BACKGROUND

In the field of communication, a terminal device performs a redirection according to a configuration of a network. For example, after 5G networks (5th Generation mobile networks) are switched on by the terminal device, the terminal device is redirected from a 4G (Fourth Generation Mobile Communications Technology) long term evolution (Long Term Evolution, LTE) cell to a 5G standalone (Standalone, SA) cell to perform a data communication service. If there is an access problem (for example, a weak signal or an authentication error) in the SA cell, a redirection failure of the terminal device will be caused. However, since a network device (for example, a base station) in a network cannot sense a redirection failure, the network device transmits a redirection notification according to a report uploaded by the terminal device, causing frequent redirection failures of the terminal device, and causing a lag in the user data communication service.

### SUMMARY

In view of the foregoing content, it is necessary to provide a method for controlling a redirection, a terminal device, and a storage medium, to solve a technical problem that a data communication service of the terminal device lags because frequent redirection failures of the terminal device.

According to a first aspect, an embodiment of the present application provides a method for controlling a redirection. The method includes: accessing, by a terminal device, a first network; when the terminal device runs a first application, in a case of detecting that a number of times of a redirection failure of the terminal device from the first network to a second network reaches a first threshold, inhibiting, in first inhibition duration, the terminal device from being redirected from the first network to the second network; and when the terminal device runs a second application, in a case of detecting that the number of times of the redirection failure of the terminal device from the first network to the second network reaches a second threshold, inhibiting, in second inhibition duration, the terminal device from being redirected from the first network to the second network, where sensitivity of the first application to latency is higher than that of the second application to latency, the first inhibition duration is greater than the second inhibition duration, and the first threshold is the same as the second threshold or not. According to the foregoing solution, different inhibition conditions can be determined according to sensitivity of an application to time, and the redirection failure of the terminal device can be inhibited according to the inhibition condition of the application running in the terminal device, such that frequent redirections from the first network to the second network is avoided when the terminal device runs the application, and a data service lag caused by frequent network switching is avoided. In addition, the inhibition condition and the inhibition duration corresponding to the application are set according to the sensitivity of the application to latency, such that whether redirection inhibition is performed on the terminal device can be evaluated more accurately, thereby guaranteeing stable running of a current data communication service of the terminal device.

In an embodiment of the present application, in a case that the redirection failure of the terminal device from the first network to the second network is detected, the method further includes: recording the number of times of the redirection failure in a case that the redirection failure is determined to be of a preset type; and continuing to detect a redirection failure of the terminal device from the first network to the second network in a case of determining that the redirection failure is not of the preset type. In the foregoing solution, the terminal device records a redirection failure of the preset type, to inhibit the redirection failure of the preset type.

In an embodiment of the present application, when the terminal device runs the first application, the method further includes: determining a foreground application of the terminal device as the first application, and determining an inhibition condition and the first inhibition duration of the first application according to application information of the first application, where the inhibition condition of the first application is that the number of times of the redirection failure of the terminal device reaches the first threshold; and when the terminal device runs the second application, the method further includes: determining a foreground application of the terminal device as the second application, and determining an inhibition condition and the second inhibition duration of the second application according to application information of the second application, where the inhibition condition of the second application is that the number of times of the redirection failure of the terminal device reaches the second threshold. In the foregoing technical solution, the inhibition condition of the foreground application may be used as a determining basis for performing redirection inhibition on the terminal device, and the redirection inhibition may be performed on the terminal device when the number of times of the redirection failure of the terminal device reaches a threshold. In this way, a problem of a lag in a data communication service of the foreground application due to a fact that the terminal device frequently performs access switching between the first network and the second network is avoided, and network communication stability is improved.

In an embodiment of the present application, the determining an inhibition condition and the first inhibition duration of the first application according to application information of the first application includes: querying a preset inhibition parameter according to the application information of the first application, and determining the inhibition condition of the first application and the first inhibition duration; and the determining an inhibition condition and the second inhibition duration of the second application according to application information of the second application includes: querying a preset inhibition parameter according to the application information of the second application, and determining the inhibition condition and the second inhibition duration of the second application. According to the technical solution, an inhibition condition and inhibition duration of the terminal device are determined by querying the preset inhibition parameter according to the application run by the terminal device, and redirection inhibition is performed on the terminal device based on the determined inhibition condition and inhibition duration.

In an embodiment of the present application, the method further includes: in a case of detecting that the number of times of the redirection failure of the terminal device from the first network to the second network does not reach the first threshold, continuing to detect a new redirection failure of the terminal device from the first network to the second network; recording the number of times of the redirection failure in a case that the new redirection failure is determined to be of a preset type; obtaining application information of a foreground application of the terminal device, to refresh the foreground application; and in a case that the foreground application is the first application, and the number of times of the redirection failure of the terminal device reaches the first threshold, inhibiting, in the first inhibition duration, the terminal device from being redirected from the first network to the second network. In the foregoing technical solution, application information of a foreground application of the terminal device is obtained to refresh the foreground application; and in a case that the foreground application is the first application, and the number of times of the redirection failure of the terminal device reaches the first threshold, in the first inhibition duration, the terminal device is inhibited from being redirected from the first network to the second network. In this way, it can be guaranteed that the terminal device always inhibits the redirection of the terminal device according to the inhibition condition of the currently running foreground application.

In an embodiment of the present application, after the obtaining application information of a foreground application of the terminal device, to refresh the foreground application, the method further includes: determining an inhibition condition and the second inhibition duration of the second application in a case that the foreground application is the second application, where the inhibition condition of the second application is that the number of times of the redirection failure of the terminal device reaches the second threshold; determining whether the redirection failure of the terminal device satisfies the inhibition condition of the second application; in a case that the redirection failure of the terminal device satisfies the inhibition condition of the second application, inhibiting, in the second inhibition duration, the terminal device from being redirected from the first network to the second network; and in a case that the redirection failure of the terminal device does not satisfy the inhibition condition of the second application, continuing to detect a new redirection failure of the terminal device from the first network to the second network. In the foregoing technical solution, in a case that the foreground application is the second application, the inhibition condition and the second inhibition duration of the second application are determined. When the redirection failure of the terminal device satisfies the inhibition condition of the second application, in the second inhibition duration, the terminal device is inhibited from being redirected from the first network to the second network, such that after the foreground application of the terminal device is switched all the time, the terminal device can still be inhibited from being redirected according to the inhibition condition of the foreground application after switching.

In an embodiment of the present application, the inhibiting, in first inhibition duration, the terminal device from being redirected from the first network to the second network includes: disabling, in the first inhibition duration, a function of the terminal device for accessing the second network; and the inhibiting, in second inhibition duration, the terminal device from being redirected from the first network to the second network includes: disabling, in the second inhibition duration, the function of the terminal device for accessing the second network. In the foregoing technical solution, after the function of the terminal device for accessing the second network is disabled in the inhibition duration, the terminal device does not search for the second network, and the terminal device does not transmit a report to the first network after the terminal device resides in the first network.

In an embodiment of the present application, the inhibiting, in first inhibition duration, the terminal device from being redirected from the first network to the second network includes: lowering, in the first inhibition duration, a priority of accessing the second network, such that a priority of accessing the first network is higher than the priority of accessing the second network; and the inhibiting, in second inhibition duration, the terminal device from being redirected from the first network to the second network includes: lowering, in the second inhibition duration, the priority of accessing the second network, such that the priority of accessing the first network is higher than the priority of accessing the second network. In the foregoing technical solution, the priority of accessing the second network is lowered in the inhibition duration, such that after the priority of accessing the first network is higher than the priority of accessing the second network, the terminal device may reside in the first network in the inhibition duration.

In an embodiment of the present application, the method further includes: when the terminal device runs the first application, in a case that duration in which the terminal device is inhibited from being redirected from the first network to the second network reaches the first inhibition duration, exiting redirection inhibition on the terminal device; and when the terminal device runs the second application, in a case that duration in which the terminal device is inhibited from being redirected from the first network to the second network reaches the second inhibition duration, exiting redirection inhibition on the terminal device. In the foregoing technical solution, after the time in which the terminal device is inhibited from being redirected from the first network to the second network reaches the inhibition duration, the function of accessing the second network by the terminal device is restored, such that the terminal device can be redirected to the second network from the first network in which the terminal device resides.

In an embodiment of the present application, after the exiting redirection inhibition on the terminal device, the method further includes: when the terminal device runs the first application, in a case of detecting, in first aging duration, that the number of times of the redirection failure of the terminal device from the first network to the second network reaches the first threshold, inhibiting the terminal device from being redirected from the first network to the second network according to third inhibition duration; when duration in which the terminal device is inhibited from being redirected from the first network to the second network reaches the third inhibition duration, exiting redirection inhibition on the terminal device; when the terminal device runs the second application, in a case of detecting, in second aging duration, that the number of times of the redirection failure of the terminal device from the first network to the second network reaches the second threshold, inhibiting the terminal device from being redirected from the first network to the second network according to fourth inhibition duration; and when duration in which the terminal device is inhibited from being redirected from the first network to the second network reaches the fourth inhibition duration, exiting redirection inhibition on the terminal device, where the third inhibition duration is greater than the first inhibition duration, and the fourth inhibition duration is greater than the second inhibition duration. In the foregoing technical solution, in a case that in the aging duration after the terminal device exits the redirection inhibition, the redirection failure of the terminal device satisfies the inhibition condition again, redirection inhibition with longer inhibition duration is performed on the terminal device, to strengthen strength of inhibiting the redirection of the terminal device, thereby improving network communication stability.

In an embodiment of the present application, the exiting redirection inhibition on the terminal device includes: restoring a function of the terminal device for accessing the second network; and alternatively, increasing a priority of accessing the second network, such that a priority of accessing the first network is higher than the priority of accessing the second network. In the foregoing technical solution, after the time in which the terminal device is inhibited from being redirected from the first network to the second network reaches the inhibition duration, the function of accessing the second network by the terminal device is restored; and alternatively, the priority of accessing the second network is increased, such that the priority of accessing the first network is higher than the priority of accessing the second network, and then the terminal device can be redirected to the second network from the first network in which the terminal device resides.

In an embodiment of the present application, after the exiting redirection inhibition on the terminal device, the method further includes: clearing the recorded number of times of the redirection failure. In the foregoing technical solution, the recorded number of times of the redirection failure is cleared, such that the terminal device can re-records the redirection failure, and determine, according to the re-recorded redirection failure, whether the terminal device needs to perform redirection inhibition.

In an embodiment of the present application, the method further includes: loading inhibition parameters during startup of the terminal device, where the inhibition parameters includes mapping relationships between different application information, an inhibition condition, and inhibition duration, and the inhibition condition includes a threshold number of times of a redirection failure of the terminal device. According to the foregoing technical solution, the inhibition parameter is loaded during startup of the terminal device, and the loaded inhibition parameter can be called by the terminal device.

According to a second aspect, an embodiment of the present application provides an electronic device. The electronic device includes a processor and a memory, where the processor is connected to the memory; the memory is configured to store program instructions; and the processor is configured to read the program instructions stored in the memory, to implement the foregoing method for controlling a redirection.

According to a third aspect, an embodiment of the present application provides a computer-readable storage medium. The computer-readable storage medium stores program instructions. The program instructions implement the foregoing method for controlling a redirection when executed by a processor.

Moreover, reference may be made to the description related to the method of each design in the above method part for the technical effects brought by the second aspect to the third aspect, and details are not described herein again.

### BRIEF DESCRIPTION OF DRAWINGS

In order to describe the technical solutions in the embodiments of the present application more clearly, a brief description of the accompanying drawings in the embodiments will be provided below. It should be understood that the following accompanying drawings show merely some embodiments of the present application, and therefore should not be deemed as limiting the scope. Those of ordinary skill in the art can also derive other accompanying drawings from these accompanying drawings without creative efforts.
FIG. 1 is a schematic diagram of an application scenario of a method for controlling a redirection according to an embodiment of the present application;
FIG. 2 is a flowchart of a method for controlling a redirection according to an embodiment of the present application;
FIG. 3 is a schematic diagram of an inhibition parameter table according to an embodiment of the present application;
FIG. 4 is a schematic diagram of disabling a function of a terminal device accessing a second network according to an embodiment of the present application;
FIG. 5 is a flowchart of a method for controlling a redirection according to another embodiment of the present application;
FIG. 6 is a schematic diagram of an inhibition parameter table according to another embodiment of the present application;
FIG. 7 is a schematic diagram of an inhibition parameter table according to another embodiment of the present application;
FIG. 8 is a flowchart of a method for controlling a redirection according to another embodiment of the present application;
FIG. 9 is a flowchart of a method for controlling a redirection according to an embodiment of the present application;
FIG. 10 is a schematic diagram of an inhibition parameter table according to another embodiment of the present application;
FIG. 11 is a flowchart of a method for controlling a redirection according to an embodiment of the present application; and
FIG. 12 is a schematic diagram of an electronic device according to an embodiment of the present application.

### DESCRIPTION OF EMBODIMENTS

The terms "first" and "second" are merely for description and cannot be interpreted as indicating or implying relative importance or implicitly indicating the number of technical features indicated. Therefore, a feature limited by "first" or "second" may explicitly or implicitly include one or more of the features. In embodiments of the present application, a term such as "illustratively" or "for example" is used for representing giving an instance, illustration, or explanation. Any embodiment or design solution described as "illustratively" or "for example" in the embodiments of the present application should not be explained as being more preferred or having more advantages than other embodiments or design solutions. Exactly, use of the term, such as "illustratively" or "for example", is intended to present a related concept in a specific manner.

Unless defined otherwise, all the technical and scientific terms used herein have the same meaning as those commonly understood by those of ordinary skill in the art to which the present application pertains. The terms used in the description of the present application are merely used for describing the specific embodiments and are not intended to limit the present application. It should be understood that in the present application, "/" represents "or" unless otherwise specified. For example, A/B may represent A or B. In the present application, "and/or" describes only an association relationship for describing associated objects and represents that three relationships may exist. For example, A and/or B may represent: A alone, both A and B, and B alone. "at least one" represents one or more. "a plurality of" represents two or more. For example, at least one of a, b, or c may represent: a, b, and c; a and b; a and c; b and c; a; b; and c.

In a communications field, after a terminal device such as a mobile phone is powered on and registers with a network, in a case that the mobile phone supports a 5G network and there is a 5G base station nearby, the mobile phone may be redirected from a 4G LTE cell to a 5G SA cell for a data communication service, to obtain better data transmission experience. With causes such as insufficient signal coverage or signal interference of the SA cell, the mobile phone may fail to access the 5G. After the access fails, the mobile phone continues to search for another cell on the 5G network. After the search fails, the mobile phone returns to the 4G network corresponding to the 4G LTE cell. The foregoing redirection process lasts for several seconds, causing interruption of the data communication service of the mobile phone. In this way, normal operation of services of data, call, etc. of the mobile phone, is influenced. Consequently, the data communication service of the mobile phone cannot be normally performed, and user experience is poor.

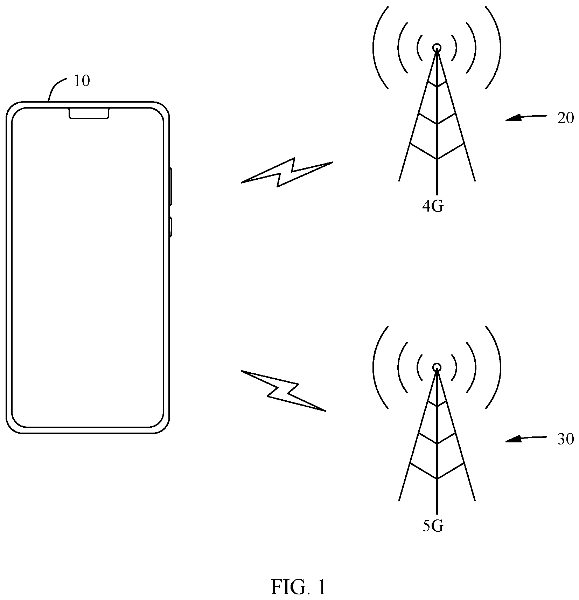

To solve the foregoing problem, the present application provides a method for controlling a redirection. The method is applied to a terminal device. With reference to FIG. 1, a schematic diagram of an application scenario of a method for controlling a redirection according to an embodiment of the present application is shown. The terminal device 10 can be redirected to the second network 30 from the first network 20 in which the terminal device currently residents. According to the method, in a process in which the terminal device 10 is redirected from the first network 20 to the second network 30, a redirection inhibiting policy is developed according to a cause of the redirection failure, and redirection inhibition is performed on the terminal device 10 according to the redirection inhibiting policy. Since the terminal device 10 performs redirection inhibition, the terminal device 10 does not report a measurement notification to the first network 20 during a redirection failure. Since no measurement notification is received, the network device (for example, base station) of the first network 20 does not transmit a redirection notification to the terminal device 10, such that the terminal device 10 can avoid frequent redirections and avoid problems influencing a user data communication service and caused during the redirection failure. The redirection inhibition in the present application means that when the terminal device 10 resides in the first network 20, the terminal device does not switch from the first network 20 to another network (for example, the second network 30) to perform the data communication service.

With the terminal device 10 in FIG. 1 being a mobile phone, the first network 20 being an LTE network, and the second network 30 being an SA network as an example, the application scenario of the method for controlling a redirection is illustrated. In the embodiment of the present application, types of the terminal device 10, the first network 20, and the second network 30 are not limited. For example, in other embodiments of the present application, the terminal device 10 may further be a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart household device and/or a smart city device, etc. In other embodiments, The first network 20 may alternatively be a 5G network, and the second network 30 may alternatively be a 6G network.

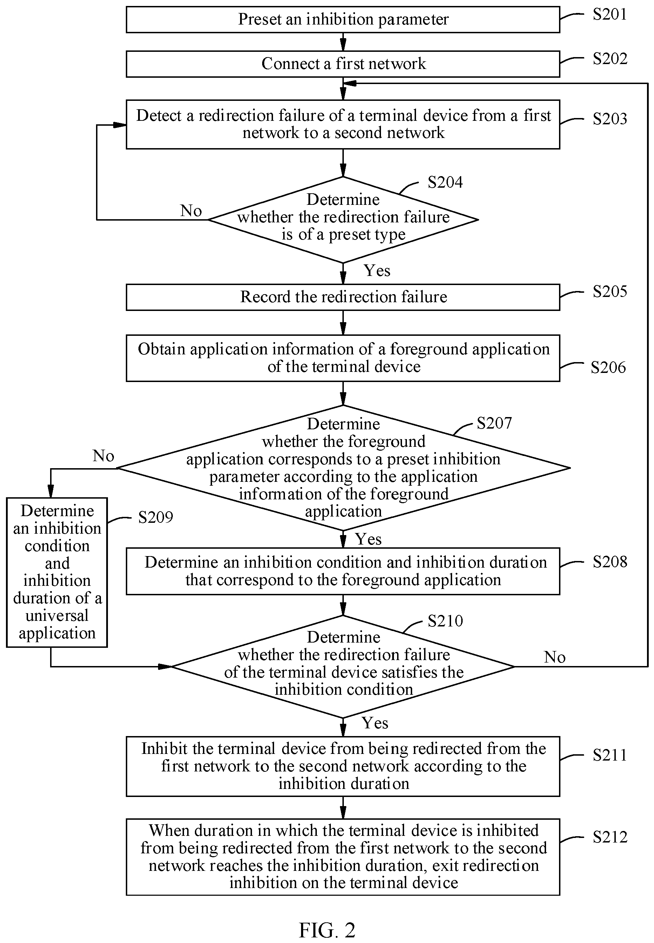

With reference to FIG. 2, a flowchart of a method for controlling a redirection according to an embodiment of the present application is shown. The method disclosed in the embodiments of the present application or the method shown in the flowchart includes one or more steps used for implementing the method. Without departing from the scope of the claims, execution orders of the plurality of steps may be interchanged with each other, and some steps may also be deleted. Some embodiment will be described with reference to the accompany drawings. The following embodiments and features in the embodiments can be combined with one another without conflict. The method for controlling a redirection is applied to a terminal device, and includes the following steps.

S201: An inhibition parameter is preset. The inhibition parameter at least includes inhibition conditions and inhibition duration corresponding to different applications.

In an embodiment of the present application, the inhibition parameter is preset in the terminal device 10 before delivery of the terminal device 10, the inhibition parameter is loaded during startup of the terminal device 10, and the loaded inhibition parameter can be called by the terminal device 10. It should be noted that S201 is an optional step. In other embodiments, The inhibition parameter may not be preset in the terminal device 10. The terminal device 10 may obtain the inhibition parameter from a server that is in communication with the terminal device 10 and call the inhibition parameter.

The terminal device 10 may preset an inhibition condition and inhibition duration that correspond to each application. For ease of managing a mapping relationship between different applications and inhibition parameters, in an embodiment, an inhibition parameter table may be preset.

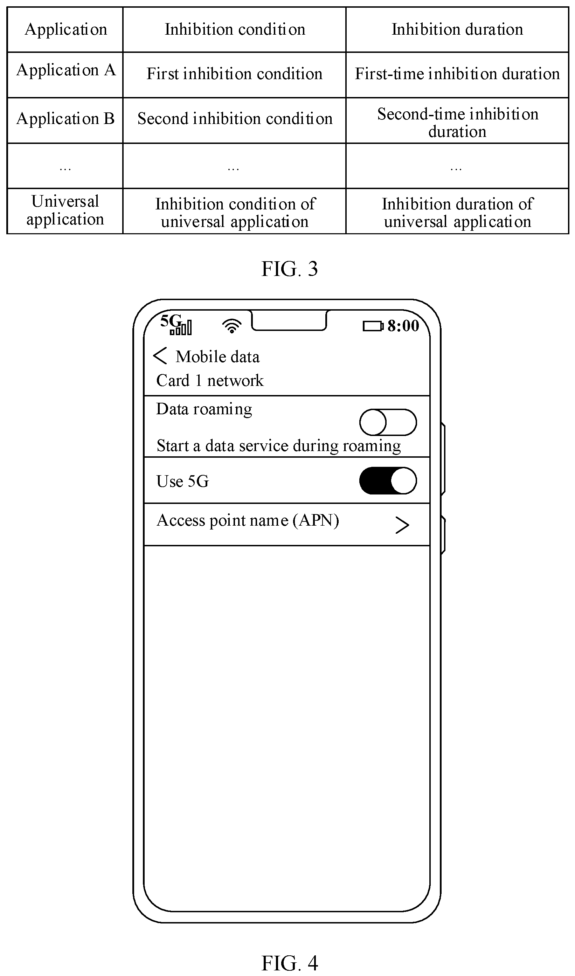

With reference to FIG. 3, a schematic diagram of an inhibition parameter table according to an embodiment of the present application is shown. The inhibition parameter table includes a plurality of applications. Each application may at least correspond to one inhibition condition and one period of inhibition duration. An application of the inhibition parameter table may be represented as an application name, an application label, or an application identifier. The application label or the application identifier may be a character string that is formed by numbers or letters for distinguishing the applications. The inhibition condition indicates that the terminal device 10 is triggered to inhibit the redirection when the number of times of the redirection failure occurring in the terminal device 10 in preset time reaches a preset number of failure times. The preset time and the preset number of times of failures in the inhibition condition may be correspondingly set according to user requirements, or types, specific attributes, etc. of different applications. For example, the application inhibition condition may be set to be that the number of times of the redirection failure occurring one minute reaches three. In a case that the application currently running on the terminal device 10 satisfies the foregoing inhibition condition, it is determined that the redirection of the terminal device 10 needs to be inhibited to avoid influencing stable running of the data communication service of the terminal device 10. Because the applications have different requirements for stable running of the data communication service, different inhibition conditions and inhibition duration may be set for different types of applications.

In an embodiment of the present application, the inhibition condition and the inhibition duration in the foregoing inhibition parameter are related to sensitivity of the application to latency. The sensitivity of the application to the latency may be represented as a number of times of lags occurring in a redirection process of the terminal device 10. A larger number of times of lags occurring in the redirection process of the terminal device 10 may represent that the application is more sensitive to the latency. For example, in conjunction with the inhibition parameter table shown in FIG. 3, the applications may be sorted according to the sensitivity of the different applications to the latency, a first inhibition condition and first-time inhibition duration are set for an application with higher latency sensitivity (for example, application A in FIG. 3), and a second inhibition condition and second-time inhibition duration are set for an application with lower latency sensitivity (for example, application B in FIG. 3). Preset time of the first inhibition condition is less than preset time of the second inhibition condition, or a preset number of times of failures of the first inhibition condition is less than a preset number of times of failures of the second inhibition condition. For example, the inhibition condition set for an application with higher latency sensitivity is that the number of times of the redirection failure occurring in one minute reaches two, and the inhibition condition set for an application with lower latency sensitivity is that the number of times of the redirection failure occurring in two minutes reaches two. Alternatively, the inhibition condition set for an application with higher latency sensitivity is that the number of times of the redirection failure occurring in one minute reaches two, and the inhibition condition set for an application with lower latency sensitivity is that the number of times of the redirection failure occurring in one minutes reaches three. In an embodiment of the present application, the application having sensitivity to the latency may be recorded in a whitelist in the inhibition parameter table for storage.

The inhibition duration refers to duration in which redirection of the terminal device 10 is inhibited. In an embodiment of the present application, the first-time inhibition duration is greater than the second-time inhibition duration. For example, the first-time inhibition duration set for an application with higher latency sensitivity is 10 minutes, for example, an instant messaging application, a video call application, or a game application. A second-time inhibition duration set for an application with lower latency sensitivity is 5 minutes, for example, a weather application, a novel reader application, or a news application. In the embodiment of the present application, for the sensitivity of an application to the latency, setting different inhibition conditions and inhibition duration can guarantee that data communication services of different applications can run stably. Relatively long inhibition duration set for an application with higher latency sensitivity can guarantee a phenomenon of data lags caused by frequent redirections of the terminal device 10. An application with lower latency sensitivity is insensitive to data latency. Accordingly, when the terminal device 10 is redirected, the data lags do not occur or rarely occurs. Thus relatively short inhibition duration may be set for the application with lower latency sensitivity.

In an embodiment of the present application, the inhibition parameter table further includes a universal application, and an inhibition condition and inhibition duration of the universal application. The universal application may include a set of other applications in the terminal device 10 except for the applications included in or specified in the inhibition parameter table. For example, as shown in FIG. 3, application A and application B are preset applications in the inhibition parameter table. Other applications except for application A and application B in the terminal device 10 may be determined as universal applications. For example, application C or application D may belong to the universal applications. In an embodiment of the present application, the inhibition condition of the universal application may be that the number of times of the redirection failure occurring in one minute reaches three, and the inhibition duration of the universal application is 5 minutes. Preset time and a preset number of times of failures in the inhibition condition corresponding to the universal application may be between the inhibition condition of an application with higher latency sensitivity and the inhibition condition of an application with lower latency sensitivity. The inhibition duration corresponding to the universal application may be between the inhibition duration of an application with higher latency sensitivity and the inhibition duration of an application with lower latency sensitivity.

S202: A first network is connected.

In an embodiment of the present application, after startup, the terminal device 10 registers the first network 20 with a cell in which the terminal device 10 is located. The first network 20 may be an LTE network. For example, after startup, the terminal device 10 registers with an LTE network of an LTE cell in which the terminal device 10 is located, to implement a data communication service of the terminal device 10. In another embodiment of the present application, when moving to a coverage area of a base station of the first network 20, the terminal device 10 is connected to the first network 20.

S203: A redirection failure of a terminal device from a first network to a second network is detected.

In an embodiment of the present application, in a case that the terminal device 10 supports the second network 30, after the terminal device 10 is connected to the first network 20, a network device of the first network 20 transmits a measurement notification of a 5G signal to the terminal device 10. In an embodiment of the present application, the second network 30 is an SA network. The terminal device 10 measures the 5G signal according to the measurement notification. For example, the terminal device 10 performs measurement 30 according to the measurement notification when receiving the 5G signal of the second network. The terminal device 10 transmits a measurement report to the first network 20 when measured power of the 5G signal satisfies preset threshold power.

In an embodiment, the measurement report includes a B1 measurement. In a 5G network, the B1 measurement may be that the terminal device 10 measures and evaluates signal strength of a neighboring cell, and determines, according to a measurement result, whether to switch to the cell. The B1 measurement may include power of the 5G signal. The B1 measurement may be used for determining connection quality, to guarantee desirable communication experience of a user. After receiving the B1 measurement transmitted by the terminal device 10, the network device of the first network 20 may transmit a redirection notification to the terminal device 10. For example, when the power of the 5G signal in the B1 measurement reaches the preset threshold power, the network device of the first network 20 transmits, to the terminal device 10, the redirection notification for redirecting to the second network 30. The preset threshold power may be set according to a user requirement. The terminal device 10 is redirected from the first network 20 to the second network 30 according to the redirection notification.

In a case that the second network 30 has an access problem (for example, a problem such as a weak signal or an authentication error), the terminal device 10 cannot access the second network 30. In a process in which the terminal device 10 is redirected from the first network 20 to the second network 30, the terminal device 10 transmits first registration information to the network device of the second network 30. In a case that the terminal device 10 does not receive reply information of the network device of the second network 30, it is determined that the terminal device 10 has a redirection failure from the first network 20 to the second network 30, and it is determined that a cause for the redirection failure is a network frequency point search failure. The cause for the redirection failure is used for indicating a type of the redirection failure. In another embodiment of the present application, when the terminal device 10 transmits the first registration information to the network device of the second network 30, in a case that the terminal device 10 does not receive the preset reply information for the first registration information from the network device of the second network 30, it is determined that the terminal device 10 has a redirection failure from the first network 20 to the second network 30, and it is determined that the cause of the redirection failure is a failure in accessing the network according to the found network frequency point. In an embodiment of the present application, the preset reply information is information replied to the terminal device by the network device of the second network 30 when the network device of the second network determines that the terminal device 10 accesses the second network 30 by using the network frequency point.

S204: Whether the redirection failure is of a preset type is determined.

In an embodiment of the present application, each time a redirection failure is detected, the terminal device 10 determines whether the detected redirection failure is of a preset type.

In an embodiment of the present application, a plurality of types or conditions may be preset to determine whether the redirection failure of the terminal device 10 is a target redirection failure of the preset type. In an embodiment of the present application, the preset type of the redirection failure includes: a failure of accessing the network by the terminal device 10 according to the found network frequency point. In a case that the redirection failure of the terminal device 10 is the failure of accessing the network by the terminal device 10 according to the found network frequency point, it is determined that the redirection failure of the terminal device 10 is the target redirection failure, and the redirection failure is of the preset type.

In an embodiment, according to the cause for the redirection failure, different redirection failures correspond to different cause values. The terminal device 10 determines whether the cause value of the redirection failure is a cause value of the target redirection failure. In a case that the cause value of the redirection failure is the cause value of the target redirection failure, the terminal device 10 determines that the redirection failure is of the preset type. In a case that the cause value of the redirection failure is not the cause value of the target redirection failure, the terminal device 10 determines that the redirection failure is not of the preset type.

For example, a cause value of the redirection failure corresponding to the failure of searching for the network frequency point by the terminal device 10 is 01, and a cause value of the redirection failure corresponding to the failure of accessing a network by the terminal device 10 according to the found network frequency point is 02. The cause value 02 corresponds to the target redirection failure. In a case that the cause for the redirection failure of the terminal device 10 is the failure of searching for the network frequency point by the terminal device 10, the terminal device 10 compares the cause value of the redirection failure (in this case, the cause value of the redirection failure is correspondingly 01) with the cause value of the target redirection failure (the cause value of the target redirection failure is 02), and determines, when comparison results are inconsistent, that the redirection failure is not of the preset type. In an embodiment of the present application, in a case that the redirection failure is determined to be of the preset type, S205 is performed; and otherwise, in a case that the redirection failure is determined not to be of the preset type, S203 is performed.

S205: The redirection failure is recorded.

In an embodiment of the present application, when the redirection failure is of the preset type, the terminal device 10 records the redirection failure. The redirection failure is recorded as follows: occurrence time of the redirection failure and the number of times of the redirection failure are recorded. In the foregoing embodiment, the terminal device 10 records a redirection failure of the preset type, to inhibit the redirection failure of the preset type.

S206: Application information of a foreground application of the terminal device is obtained.

In an embodiment of the present application, the terminal device 10 obtains the application information corresponding to the application running on the terminal device 10, for example, the application information of the foreground application. Since the foreground application is an application program currently running on the terminal device 10, and a redirection behavior of the terminal device 10 influences a data communication service of the foreground application, when the redirection failure occurs, a corresponding inhibition condition needs to be determined according to the foreground application,, whether to inhibit the redirection behavior of the terminal device 10 can be evaluated according to the determined inhibition condition, and stable running of the data communication service of the terminal device 10 can be guaranteed.

In an embodiment of the present application, the application information of the foreground application includes a name, an application label, or an application identifier of the application currently running on the terminal device 10. For example, when the foreground application is a game application, the application information of the foreground application may be a name of the game application. Specific implementation content of each step is described below by using an example in which the game application is the foreground application.

S207: Whether the foreground application corresponds to a preset inhibition parameter is determined according to the application information of the foreground application.

In an embodiment of the present application, the terminal device 10 may search for a preset inhibition parameter according to the application information of the game application (for example, an inhibition parameter table shown in FIG. 3), and determine whether an application matching the application information of the game application exists in the inhibition parameter. In a case that the terminal device 10 searches for the inhibition parameter according to the name, the label, or the application identifier of the game application, and in a case of determining that an application consistent with the name, the application label, or the application identifier of the game application exists in the inhibition parameter, the terminal device 10 determines that the application matching the application information of the game application exists in the inhibition parameter. In a case of determining that no application consistent with the name, the application label, or the application identifier of the game application exists in the inhibition parameter, the terminal device 10 determines that no application matching the application information of the game application exists in the inhibition parameter.

In an embodiment of the present application, in a case that the application matching the application information of the game application exists in the inhibition parameter, S208 is performed; and otherwise, in a case that no application matching the application information of the game application exists in the inhibition parameter, S209 is performed.

S208: An inhibition condition and inhibition duration that correspond to the foreground application are determined. S210 is performed after S208 is performed.

In an embodiment of the present application, in a case that the application matching the application information of the game application exists in the inhibition parameter, the terminal device 10 determines, from the inhibition parameter, the inhibition condition and the inhibition duration that correspond to the game application. For example, the terminal device 10 determines, from the inhibition parameters, that the inhibition condition corresponding to the game application is "the number of times of the redirection failure occurring in one minute reaches two", and the inhibition duration is 5 minutes. The terminal device 10 determines, according to the foregoing inhibition condition, whether the terminal device performs redirection inhibition on the terminal device 10.

In an embodiment of the present application, the S206 may be replaced as follows: application information of a background application of the terminal device is obtained. Correspondingly, S206 is replaced as follows: Whether the foreground application corresponds to a preset inhibition parameter is determined according to the application information of the foreground application. S208 may be replaced as follows: an inhibition condition and inhibition duration that correspond to the background application are determined. In the foregoing solution, after a corresponding inhibition condition is determined according to the background application, whether to inhibit the redirection behavior of the terminal device 10 is evaluated according to the determined inhibition condition, such that stable running of a data communication service of the background application can be guaranteed.

S209: An inhibition condition and inhibition duration of a universal application are determined. S210 is performed after S209 is performed.

In an embodiment of the present application, in a case that the application information of the game application is not in the inhibition parameter, the terminal device 10 uses the inhibition condition of the universal application as the inhibition condition corresponding to the application information of the game application, uses the inhibition duration of the universal application as the inhibition duration corresponding to the application information of the game application, and evaluates, according to the inhibition condition and the inhibition duration of the universal application, whether to perform redirection inhibition on the game application of the terminal device 10, thereby guaranteeing completeness and smoothness of performance of the method for controlling a redirection.

In an embodiment of the present application, the S209 may be replaced as follows: the terminal device does not perform redirection inhibition. That is, when it is determined that no application matching the application information of the foreground application exists in the inhibition parameter, the terminal device 10 does not perform redirection inhibition.

S210: Whether the redirection failure of the terminal device satisfies the inhibition condition is determined.

In an embodiment of the present application, the terminal device 10 may determine, according to the number of times and the occurrence time of the redirection failure recorded in S205, whether the redirection failure of the terminal device 10 satisfies the inhibiting condition. For example, in a case that the terminal device 10 determines, according to the recorded number of times and occurrence time of the redirection failure, that the terminal device 10 satisfies the inhibition condition of "the number of times of the redirection failure occurring in one minute reaches two", it is determined that the redirection failure satisfies the inhibition condition. In a case that the redirection failure satisfies the inhibition condition, S211 is performed. In a case that the terminal device 10 determines, according to the recorded number of times and the occurrence time of the redirection failure, that the terminal device 10 has one redirection failure in one minute, and does not satisfy the inhibition condition of "the number of times of the redirection failure occurring in one minute reaches two", the process returns to S203, to continue to detect a new redirection failure of the terminal device 10 from the first network 20 to the second network 30. In S204, in a case of determining that the new redirection failure is of the preset type, S205 is performed to continue to record occurrence time of the new redirection failure and the number of times of all redirection failures. After S205 is performed, S206 is performed to continue to obtain the application information of the foreground application of the terminal device 10, to refresh the foreground application.

In a case that the refreshed foreground application is still the game application, S207 to S209 are skipped, and S210 is performed to determine, according to the occurrence time of the new redirection failure and the number of times of all redirection failure, whether the redirection failure of the terminal device satisfies the inhibition condition of the game application. In a case of determining, according to the occurrence time of the new redirection device and the numbers of times of all redirection failures, that the terminal device 10 satisfies the inhibition condition of "the number of times of the redirection failure occurring in one minute reaches two", S211 is performed. Otherwise, in a case of determining, according to the occurrence time of the new redirection device and the numbers of times of all redirection failures, that the terminal device 10 satisfies the inhibition condition of "the number of times of the redirection failure occurring in one minute reaches two", the process returns to S203.

In a case that the refreshed foreground application is not the game application, but is switched to another application such as a news application, S207 is performed to continue to determine, according to application information of the news application, whether the news application corresponds to the preset inhibition parameter. In a case that an application matching the application information of the news application exists in the inhibition parameter, S208 is performed to determine an inhibition condition and inhibition duration that correspond to the news application. For example, sensitivity of the news application to latency is less than the sensitivity of the game application to the latency, the terminal device 10 determines, from the inhibition parameter, that the inhibition condition corresponding to the news application is "the number of times of the redirection failure occurring in two minutes reaches three", and the inhibition duration corresponding to the news application is 10 minutes. In a case that no application matching the application information of the news application exists in the inhibition parameter, S209 is performed to determine an inhibition condition and inhibition duration of the universal application. After S208 or S209 is performed, S210 is performed to determine whether the redirection failure of the terminal device 10 satisfies the inhibition condition of the news application. In a case of determining that the terminal device 10 satisfies the inhibition condition of "the number of times of the redirection failure occurring in two minutes reaches three", S211 is performed. S211: The terminal device is inhibited from being redirected from the first network to the second network according to the inhibition duration.

In an embodiment of the present application, in a case that the foreground application is a game application, the terminal device 10 inhibits, according to the inhibition duration of the game application, the terminal device 10 from being redirected from the first network 20 to the second network 30. In a case that the foreground application is a news application, the terminal device 10 inhibits, according to the inhibition duration of the news application, the terminal device 10 from being redirected from the first network 20 to the second network 30. In an embodiment of the present application, the terminal device 10 is inhibited from being redirected from the first network 20 to the second network 30 according to the inhibition duration as follows: the function of the terminal device 10 for accessing the second network 30 is disabled in the inhibition duration. In an embodiment of the present application, after the function of the terminal device 10 for accessing the second network 30 is disabled in the inhibition duration, the terminal device 10 does not search for the second network 30, and the terminal device 10 does not transmit a report to the first network 20 after the terminal device resides in the first network 20. With reference to FIG. 4, with the second network 30 being a 5G network and the first network 20 being an LTE network as an example, when it is determined that the redirection failure satisfies the inhibition condition, the terminal device 10 generates an instruction for shutting down the 5G network in the inhibition duration by shutting down a switch of the 5G network. The terminal device 10 transmits second registration information to the LTE network according to the instruction for shutting down the 5G network, to indicate that the terminal device 10 has disabled the function of accessing the 5G network.

In an embodiment of the present application, the terminal device 10 is inhibited from being redirected from the first network 20 to the second network 30 according to the inhibition duration as follows: the priority of accessing the second network 30 is lowered, such that the priority of accessing the first network 20 is higher than the priority of accessing the second network 30; and When residing in the first network 20, the terminal device 10 does not report the B1 measurement that is configured by the first network 20 for the second network 30 to the first network 20.

In an embodiment of the present application, the terminal device 10 is inhibited from being redirected from the first network 20 to the second network 30 according to the inhibition duration as follows: an inhibition manner is determined according to the type of the redirection failure of the terminal device 10; and the terminal device 10 is inhibited, according to the inhibition duration and the inhibition manner, from being redirected from the first network 20 to the second network 30. Specifically, in a case of determining that the type of the redirection failure of the terminal device 10 is that the terminal device 10 fails in searching for a network frequency point, it is determined that the inhibition manner of the terminal device 10 is disabling the function of accessing the second network 30 by the terminal device 10. In a case of determining that the type of the redirection failure of the terminal device 10 is that the terminal device 10 fails in accessing the network according to the found network frequency point, it is determined that the inhibition manner of the terminal device 10 is as follows: the priority of accessing the second network 30 is lowered, such that the priority of accessing the first network 20 is higher than the priority of accessing the second network 30; and When residing in the first network 20, the terminal device 10 does not report the B1 measurement that is configured by the first network 20 for the second network 30 to the first network 20.

In the present application, in a process in which the terminal device 10 is redirected from the first network 20 to the second network 30, in a case of determining that the type of the redirection failure of the terminal device 10 is that the terminal device 10 fail to search for a network frequency point of the second network 30, it indicates that there is no base station including the second network 30 nearby the terminal device 10, and alternatively, a connection signal of the base station including the second network 30 is very weak. The terminal device 10 disables the function of accessing the second network 30, then the terminal device 10 temporarily loses a capability of accessing the second network 30, does not search for the second network 30, and does not report the B1 measurement when the terminal device 10 accesses the first network 20. Thus the capability of the terminal device 10 to be redirected from the first network 20 to the second network 30 is completely inhibited. In this way, a capability of inhibiting the failure of searching for a network frequency point of the second network 30 by the terminal device 10 is improved. In the present application, in a process in which the terminal device 10 is redirected from the first network 20 to the second network 30, in a case of determining that the type of the redirection failure of the terminal device 10 is that the terminal device 10 fails in accessing the network according to the found network frequency point, it indicates that a base station including the second network 30 exists nearby the terminal device 10, but a connection signal of the base station of the second network 30 is weak, such that the terminal device 10 cannot stably access the second network 30. The terminal device 10 lowers the priority of accessing the second network 30, such that the priority of accessing the first network 20 is higher than the priority of accessing the second network 30. Thus when the terminal device 10 performs redirection inhibition, a capability of accessing the second network 30 is reserved. In the embodiment of the present application, when the redirection failure of the terminal device 10 satisfies the inhibition condition, the terminal device 10 is inhibited, according to the inhibition duration, from being redirected from the first network 20 to the second network 30, to avoid that the terminal device 10 frequently performs redirection in short time. Accordingly, a problem of a lag in the data communication service of the foreground application caused when the terminal device 10 frequently performs access switching between the first network 20 and the second network 30 can be avoided, and network communication stability is improved.

S212: When duration in which the terminal device is inhibited from being redirected from the first network to the second network reaches the inhibition duration, redirection inhibition on the terminal device is exited.

In an embodiment of the present application, after the time in which the terminal device 10 is inhibited from being redirected from the first network 20 to the second network 30 reaches the inhibition duration, the function of accessing the second network 30 by the terminal device 10 is restored, such that the terminal device 10 can be redirected to the second network 30 from the first network 20 in which the terminal device resides. For example, after it is determined that the time in which the terminal device 10 is redirected from the first network 20 to the second network 30 reaches the inhibition duration, the terminal device 10 switches on the 5G network to generate an instruction for enabling the 5G network, and the terminal device 10 transmits third registration information to the first network 20 according to the instruction for enabling the 5G network, to indicate that the terminal device 10 has enabled the function of accessing the second network 30.

In another embodiment of the present application, after the time in which the terminal device 10 is inhibited from being redirected from the first network 20 to the second network 30 reaches the inhibition duration, the priority of the second network 30 is restored, such that the priority of accessing the first network 20 is lower than the priority of accessing the second network 30. When residing in the first network 20, the terminal device 10 reports, to the first network 20, the B1 measurement configured by the first network 20 for the second network 30, such that a network device of the first network 20 can transmit a redirection notification to the terminal device 10 according to the B1 measurement. The terminal device 10 is redirected from the first network 20 to the second network 30 according to the redirection notification transmitted by the first network 20.

In an embodiment of the present application, the exiting redirection inhibition on the terminal device further includes: the recorded occurrence time of the redirection failure and the recorded number of times of the redirection failure are cleared. In the embodiment, by clearing the recorded occurrence time of the redirection failure and the number of times of the redirection failure, it is convenient for the terminal device 10 to re-record the redirection failure, and determine again whether the terminal device 10 needs to perform redirection inhibition according to the re-recorded redirection failure.

In the embodiment of the present application, when duration in which the terminal device 10 is inhibited from being redirected from the first network 20 to the second network 30 reaches the inhibition duration, inhibition on the terminal device 10 is exited, such that the terminal device 10 accesses the second network 30 having a higher data transmission rate for communication, thereby improving data communication service quality.

In the embodiment of the present application, the inhibition parameter may be preset, the inhibition parameter of the application is set, and the inhibition parameter is searched for according to the application information of the foreground application, such that the inhibition condition and the inhibition duration that correspond to the foreground application are determined. When the redirection failure of the terminal device 10 satisfies the inhibition condition, the terminal device 10 is inhibited, according to the inhibition duration, from being redirected from the first network 20 to the second network 30, to avoid that the terminal device 10 frequently performs redirection in short time. Accordingly, a problem of a lag in the data communication service of the foreground application caused when the terminal device 10 frequently performs access switching between the first network 20 and the second network 30 can be avoided, and network communication stability is improved.

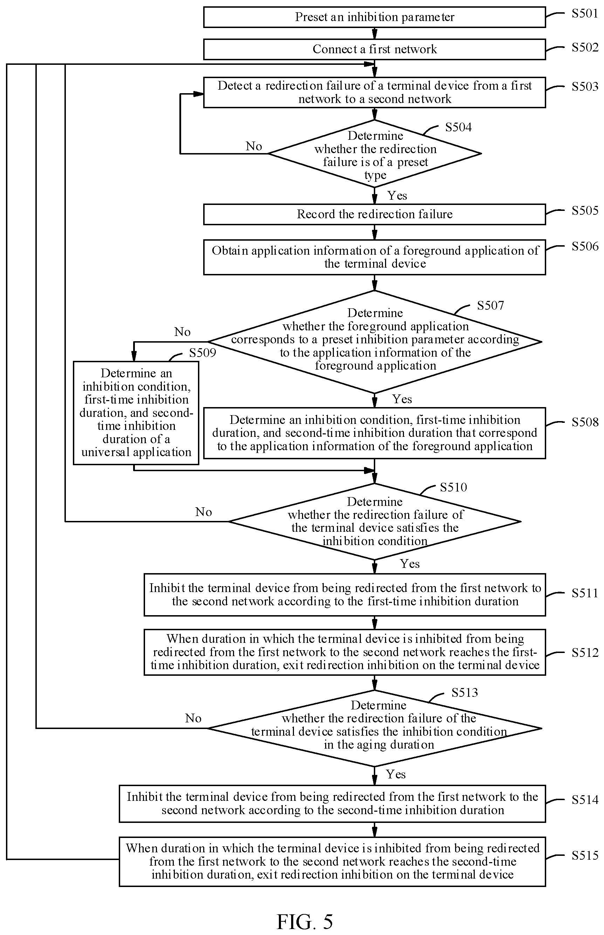

In an embodiment of the present application, in a case that the terminal device 10 has frequent redirection failures again in short time after exiting the redirection inhibition, it indicates that access to the second network 30 is unstable, and the data communication service of the terminal device 10 is seriously influenced by the frequent redirection failures of the terminal device 10. According to the embodiment of the present application, a degree of inhibiting the redirection of the terminal device 10 may be increased to improve network communication stability. Specifically, With reference to FIG. 5, a flowchart of a method for controlling a redirection according to another embodiment of the present application is shown. The method specifically includes the following steps.

S501: An inhibition parameter is preset.

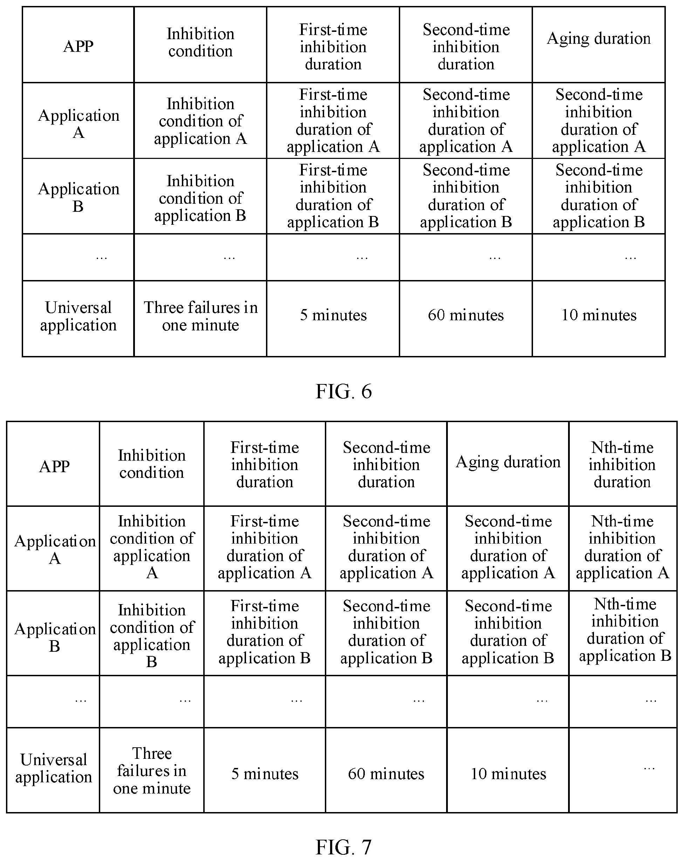

Different from S201, with reference to FIG. 6, a schematic diagram of an inhibition parameter table according to another embodiment of the present application is shown. The inhibition parameter table includes an application, an inhibition condition, first-time inhibition duration, second-time inhibition duration, and aging duration. Each application corresponds to at least one inhibition condition, one period of first-time inhibition duration, one period of second-time inhibition duration, and one period of aging duration. The aging duration may represent time from a moment at which the terminal device 10 exits the redirection inhibition to a moment at which the terminal device 10 satisfies the inhibition condition and needs to perform redirection inhibition again. For example, in a case that the aging duration is 10 minutes, it indicates that the time from the moment at which the terminal device 10 exits the redirection inhibition to a moment at which the terminal device 10 satisfies the inhibition condition again is 10 minutes. In the embodiment of the present application, in a case that the terminal device 10 satisfies the inhibition condition again in the aging duration after exiting from the redirection inhibition for the first-time inhibition duration, redirection inhibition for the second-time inhibition duration is performed on the terminal device 10. In an embodiment of the present application, the second-time inhibition duration may be greater than the first-time inhibition duration. In other embodiments, the inhibition duration may be set according to an actual situation. This is not limited in the embodiments of the present application.

In the embodiment of the present application, an inhibition condition for redirection inhibition each time is the same. In other embodiments, the condition for redirection inhibition each time may be alternatively set to be different. Specifically, the inhibition condition for redirection inhibition each time may be preset or adjusted in advance in the inhibition parameter table. This is not limited in the present application.

S502: A first network is connected.

S503: A redirection failure of a terminal device from a first network to a second network is detected.

S504: Whether the redirection failure is of a preset type is determined. In an embodiment of the present application, in a case that the redirection failure is determined to be of the preset type, S505 is performed; and otherwise, in a case that the redirection failure is determined not to be of the preset type, S503 is performed.

S505: The redirection failure is recorded.

S506: Application information of a foreground application of the terminal device is obtained.

S507: Whether the foreground application corresponds to a preset inhibition parameter is determined according to the application information of the foreground application. In a case that the foreground application corresponds to the preset inhibition parameter, S508 is performed. In a case that the foreground application does not correspond to the preset inhibition parameter, S509 is performed. In an embodiment of the present application, the terminal device 10 may search for the preset inhibition parameter according to the application information of the foreground application (for example, the inhibition parameter table shown in FIG. 6) and determine whether the foreground application corresponds to the preset inhibition parameter. In a case that it is determined that an application consistent with a name or an application label or an application identifier of the foreground application exists in the inhibition parameters, the terminal device 10 determines the foreground application corresponds to the preset inhibition parameter; and in a case of determining that no application consistent with a name or an application label or an application identifier of the foreground application exists in the inhibition parameters, the terminal device 10 determines the foreground application does not correspond to the preset inhibition parameter.

S508: An inhibition condition, first-time inhibition duration, and second-time inhibition duration that correspond to the application information of the foreground application are determined.

S509: An inhibition condition, first-time inhibition duration, and second-time inhibition duration of a universal application are determined.

S510: Whether the redirection failure of the terminal device satisfies the inhibition condition is determined. In a case that the redirection failure satisfies the inhibition condition, S511 is performed; and otherwise, in a case that the redirection failure does not satisfy the inhibition condition, S503 is performed again.

S511: The terminal device is inhibited from being redirected from the first network to the second network according to the first-time inhibition duration.

S512: When duration in which the terminal device is inhibited from being redirected from the first network to the second network reaches the first-time inhibition duration, redirection inhibition on the terminal device is exited.

In an embodiment of the present application, S501 to S512 in FIG. 5 correspond to S201 to S212 in FIG. 2. Reference may be made to description content of S201 to S212 in FIG. 2 for implementation content of S501 to S512, and details are not described herein again.

S513: Whether the redirection failure of the terminal device satisfies the inhibition condition in aging duration is determined.

In an embodiment of the present application, in a case that the foreground application is a game application, the terminal device 10 determines whether the redirection failure of the terminal device 10 satisfies an inhibiting condition of the game application in the aging duration. For example, in a case that the terminal device 10 determines that the redirection failure of the terminal device 10 satisfies the inhibition condition that "the number of times of the redirection failure occurring in one minute reaches two" in the aging duration, it is determined that the redirection failure of the terminal device 10 satisfies the inhibition condition again. In a case that the redirection failure of the terminal device 10 in the aging duration satisfies the inhibition condition again, S514 is performed; and otherwise, in a case that the redirection failure of the terminal device 10 in the aging duration does not satisfy the inhibition condition, the process returns to S503.

S514: The terminal device is inhibited from being redirected from the first network to the second network according to the second-time inhibition duration.

In an embodiment of the present application, reference may be made to specific implementation content of S211 in FIG. 2 for specific implementation content of S514, and details are not described herein again

S515: When duration in which the terminal device is inhibited from being redirected from the first network to the second network reaches the second-time inhibition duration, redirection inhibition on the terminal device is exited.

In a case that in aging duration after the terminal device 10 exits the redirection inhibition, the redirection failure of the terminal device 10 satisfies the inhibition condition again, redirection inhibition with second-time inhibition duration is performed on the terminal device 10, to strengthen strength of inhibiting the redirection of the terminal device 10, thereby improving network communication stability.

In an embodiment of the application, after S515, the process returns to S503.

For example, with the terminal device 10 being a mobile phone, the first network 20 being an LTE network, and the second network being an SA network as an example, when the mobile phone runs a game application, a lag in the game application may be caused because the mobile phone is frequently redirected from the LTE network to the SA network. In the embodiment of the present application, the mobile phone may preset the inhibition parameter first. The inhibition parameters include the game application, and an inhibition condition, first-time inhibition duration, second-time inhibition duration, and aging duration of the game application. After the mobile phone is connected to the LTE network, the mobile phone detects a redirection failure of the mobile phone from the LTE network to the SA network, and determines whether the redirection failure is of a preset type. In a case that the redirection failure of the mobile phone is a failure of accessing the network according to a found network frequency point, the redirection failure of the mobile phone is determined to be of the preset type. The mobile phone records occurrence time of the redirection failure and the number of times of the redirection failure. The mobile phone obtains that the application information of the foreground application of the mobile phone is application information of the game application, searches for a preset inhibition parameter according to the application information of the game application, and determines an inhibition condition, first-time inhibition duration, second-time inhibition duration, and aging duration of the game application. In a case that it is detected that the number of times of the redirection failure of the mobile phone satisfies an inhibition condition of "the number of times of the redirection failure occurring in one minute reaches two", the mobile phone inhibits the redirection of the mobile phone from the LTE network to the SA network according to the first-time inhibition duration of 5 minutes. In a case that duration in which the mobile phone is inhibited from being redirected from the LTE network to the SA network reaches 5 minutes, redirection inhibition on the mobile phone is exited. In a case that in the aging duration of the game application, when the redirection failure of the mobile phone satisfies the inhibition condition of "the number of times of the redirection failure occurring in one minute reaches two" again, it indicates that the SA network has a serious access problem. The mobile phone increases strength of redirecting the mobile phone according to the second-time inhibition duration of 60 minutes, to avoid frequent redirections of the mobile phone from the LTE network to the SA network, and avoid lags of the game application. When duration in which the mobile phone is inhibited from being redirected from the LTE network to the SA network reaches 60 minutes, redirection inhibition on the mobile phone is exited. Finally, the mobile phone continues to detect the redirection failure from the LTE network to the SA network, and repeats the foregoing steps to determine whether the redirection failure of the mobile phone satisfies the inhibition condition of "the number of times of the redirection failure occurring in one minute reaches two". In a case that the redirection failure of the mobile phone satisfies the inhibition condition, redirection inhibition is performed on the mobile phone according to the second-time inhibition duration.

With reference to FIG. 7, a schematic diagram of an inhibition parameter table according to another embodiment of the present application is shown. The inhibition parameter table includes an application, an inhibition condition, first-time inhibition duration, a second-time inhibition duration, aging duration, ..., and Nth-time inhibition duration. Each application corresponds to one inhibition condition, one period of first-time inhibition duration, one period of second-time inhibition duration, one period of aging duration, ..., and one period of Nth-time inhibition duration. N is an integer greater than 2. The first-time inhibition duration, the second-time inhibition duration, ..., and the Nth-time inhibition duration are sequentially ascending. In the embodiment of the present application, the aging duration of each application may be the same or not. In the embodiment of the present application, in a case that the terminal device 10 satisfies the inhibition condition again in the aging duration after exiting from the redirection inhibition for the first-time inhibition duration, second redirection inhibition is performed on the terminal device 10 for the second-time inhibition duration. The rest can be deduced by analogy. In a case that the terminal device 10 satisfies the inhibition condition again in the aging duration after exiting from the redirection inhibition for the second-time inhibition duration, third redirection inhibition is performed on the terminal device 10 according to third-time inhibition duration. The foregoing steps are repeated until redirection inhibition for Nth-time inhibition duration is performed on the terminal device 10 or until the terminal device 10 does not satisfy the inhibition condition in the aging duration. In a case that the terminal device 10 does not satisfy the inhibition condition in the aging duration, the terminal device 10 returns to S509. In an embodiment of the present application, after S514 is performed, the inhibition duration in S513 and S514 are updated, and S512 to S514 are cyclically performed until duration in which the terminal device 10 is inhibited from being redirected from the first network 20 to the second network 30 reaches the Nth-time inhibition duration. The terminal device 10 repeatedly determines whether the redirection failure of the terminal device 10 satisfies the inhibition condition. In a case that the redirection failure of the terminal device satisfies the inhibition condition, redirection inhibition is repeatedly performed on the terminal device 10 according to the Nth-time inhibition duration.

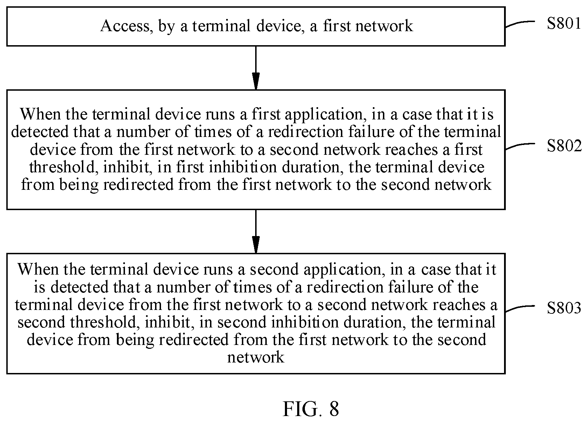

With reference to FIG. 8, a flowchart of a method for controlling a redirection according to an embodiment of the present application is shown. The method is applied to a terminal device 10. The terminal device 10 is connected to a first network 20. The method includes the following steps.

S801: A terminal device accesses a first network.

In an embodiment of the present application, reference may be made to description content of S202 in FIG. 2 for implementation content of S801, and details are not described herein again.

S802: When the terminal device runs a first application, in a case of detecting that a number of times of a redirection failure of the terminal device from the first network to a second network reaches a first threshold, in first inhibition duration, the terminal device is inhibited from being redirected from the first network to the second network.

In an embodiment of the present application, reference may be made to description content of S203 in FIG. 2 for specific implementation content that the redirection failure of the terminal device 10 from the first network 20 to the second network 30 is detected.

In an embodiment of the present application, when the terminal device 10 runs the first application, a foreground application of the terminal device 10 is determined as the first application, and an inhibition condition and the first inhibition duration of the first application are determined according to application information of the first application. The inhibition condition of the first application is that the number of times of the redirection failure of the terminal device 10 reaches the first threshold.

In an embodiment of the present application, in a case that the redirection failure of the terminal device 10 from the first network 20 to the second network 30 is detected, the method further includes: the number of times of the redirection failure is recorded in a case that the redirection failure is determined to be of a preset type; and It is continued to detect a redirection failure of the terminal device 10 from the first network 20 to the second network 30 in a case of determining that the redirection failure is not of the preset type.

S803: When the terminal device runs a second application, in a case of detecting that a number of times of the redirection failure of the terminal device from the first network to the second network reaches a second threshold, in second inhibition duration, the terminal device is inhibited from being redirected from the first network to the second network.

Sensitivity of the first application to latency is higher than that of the second application to latency, the first inhibition duration is greater than the second inhibition duration, and the first threshold is the same as the second threshold or not. In an embodiment of the present application, when the terminal device 10 runs the second application, a foreground application of the terminal device 10 is determined as the second application, and an inhibition condition and the second inhibition duration of the second application are determined according to application information of the second application. The inhibition condition of the second application is that the number of times of the redirection failure of the terminal device 10 reaches the second threshold.

In an embodiment of the present application, when the terminal device 10 runs the first application, the method further includes: in a case of detecting that the number of times of the redirection failure of the terminal device 10 from the first network 20 to the second network 30 does not reach the first threshold, it is continued to detect a new redirection failure of the terminal device 10 from the first network 20 to the second network 30; the number of times of the redirection failure is recorded in a case that the new redirection failure is determined to be of a preset type; application information of a foreground application of the terminal device 10 is obtained to refresh the foreground application; and in a case that the foreground application is the first application, and the number of times of the redirection failure of the terminal device 10 reaches the first threshold, in the first inhibition duration, the terminal device 10 is inhibited from being redirected from the first network 20 to the second network 30.

In an embodiment of the present application, after the application information of the foreground application of the terminal device 10 is obtained to refresh the foreground application, the method further includes: an inhibition condition and the second inhibition duration of the second application are determined in a case that the foreground application is the second application; whether the redirection failure of the terminal device 10 satisfies the inhibition condition of the second application is determined; in a case that the redirection failure of the terminal device 10 satisfies the inhibition condition of the second application, in the second inhibition duration, the terminal device 10 is inhibited from being redirected from the first network 20 to the second network 30; and in a case that the redirection failure of the terminal device 10 does not satisfy the inhibition condition of the second application, it is continued to detect a new redirection failure of the terminal device 10 from the first network 20 to the second network 30 until the redirection failure of the terminal device 10 satisfies the inhibition condition of the foreground application.

In the embodiment of the present application, when the terminal device 10 runs the first application, in a case of detecting that the number of times of the redirection failure of the terminal device 10 reaches the first threshold, in first inhibition duration, the terminal device 10 is inhibited from being redirected from the first network 20 to the second network 30; and when the terminal device runs the second application, in a case of detecting that the number of times of the redirection failure of the terminal device 10 reaches the second threshold, in second inhibition duration, the terminal device 10 is inhibited from being redirected from the first network 20 to the second network 30. In this way, according to the present application, different inhibition conditions can be determined according to types of applications run on the terminal device 10, and the redirection failure of the terminal device 10 is inhibited according to the inhibition conditions corresponding to the applications, such that frequent redirections from the first network 20 to the second network 30 is avoided when the terminal device 10 runs the applications, and the problem of data service lags caused by frequent network switching is solved.

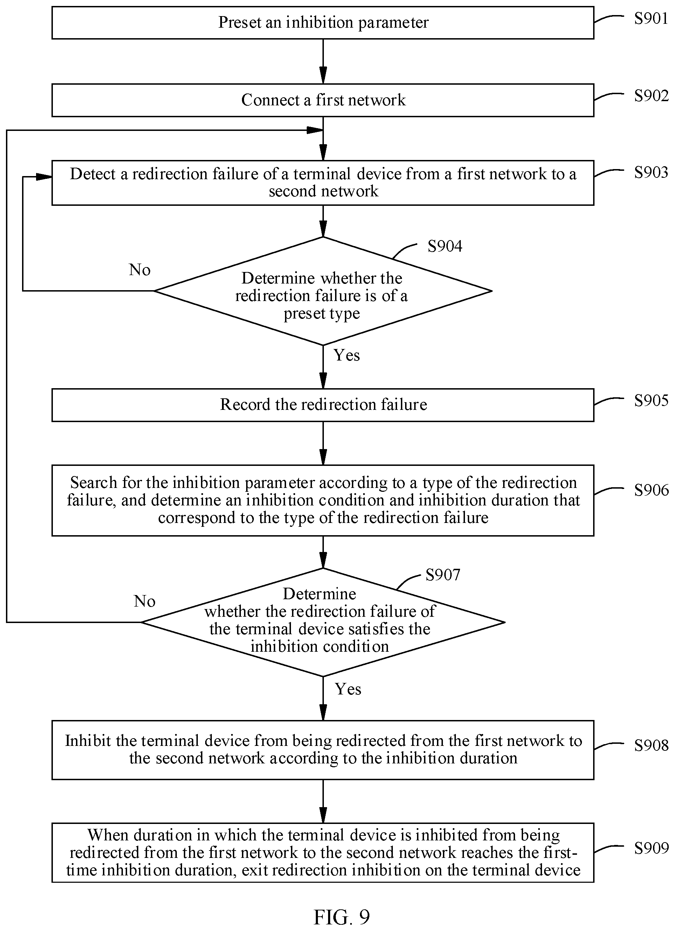

With reference to FIG. 9, a flowchart of a method for controlling a redirection according to an embodiment of the present application is shown. The method includes the following steps.

S901: An inhibition parameter is preset.

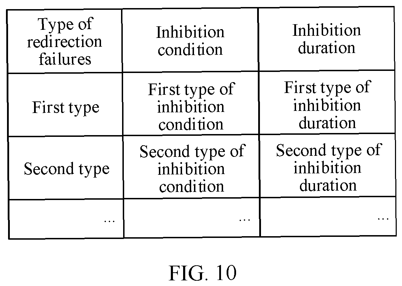

As shown in FIG. 10, the inhibition parameter may be preset by presetting an inhibition parameter table. The inhibition parameter includes a plurality of types of redirection failures, and an inhibition condition and inhibition duration that correspond to each type of redirection failure.

S902: A first network is connected.

S903: A redirection failure of a terminal device from a first network to a second network is detected.

S904: Whether the redirection failure is of a preset type is determined. In an embodiment of the present application, in a case that the redirection failure is determined to be of the preset type, S905 is performed; and otherwise, in a case that the redirection failure is determined not to be of the preset type, S903 is performed.

S905: The redirection failure is recorded.

In an embodiment of the present application, S901 to S905 in FIG. 9 correspond to S201 to S205 in FIG. 2. Reference may be made to description content of S201 to S205 in FIG. 2 for implementation content of S901 to S905, and details are not described herein again.

S906: The inhibition parameter is searched for according to a type of the redirection failure, and an inhibition condition and inhibition duration that correspond to the type of the redirection failure are determined.

In the embodiment of the present application, the terminal device 10 may search for the preset inhibition parameter according to the type of the redirection failure of the terminal device 10, and determine the inhibition condition and the inhibition duration that correspond to the type of the redirection failure. The inhibition parameter may be preset by using the inhibition parameter table. As shown in FIG. 10, the inhibition parameter table includes a plurality of types of redirection failures, and an inhibition condition and inhibition duration that correspond to each type of redirection failure. For example, an inhibition condition corresponding to the first type is "the number of times of the redirection failure occurring in one minute reaches two", and inhibition duration corresponding to the first type is 10 minutes. An inhibition condition corresponding to the second type is "the number of times of the redirection failure occurring in one minute reaches three", and inhibition duration corresponding to the second type is 5 minutes. The first type is that the terminal device 10 fails in searching for a network frequency point, and the second type is that the terminal device 10 fails in accessing a network according to the found network frequency point.

S907: Whether the redirection failure of the terminal device satisfies the inhibition condition is determined. In a case that the redirection failure satisfies the inhibition condition, S908 is performed; and otherwise, in a case that the redirection failure does not satisfy the inhibition condition, S903 is performed again. In an embodiment of the present application, in a case that the type of the redirection failure is the first type, whether the redirection failure of the terminal device satisfies the inhibition condition of the first type is determined. In a case that the redirection failure of the terminal device satisfies the first type of the inhibition condition, S908 is performed.

In a case that the first type of the inhibition condition is not satisfied, S903 is performed, that is, it is continued to detect a redirection failure of the terminal device 10 from the first network 20 to the second network 30. In a case that the new redirection failure is of the second type, S904 is performed. In a case that the second type of the redirection failure also belongs to the preset type, S905 is performed, to record occurring time and the number of times of the redirection failure. After S905 is performed, S906 is performed. An inhibition condition corresponding to the second type is searched for according to the second type of the redirection failure. The inhibition condition is "the number of times of the redirection failure occurring in one minute reaches three", and the inhibition duration is 5 minutes. Whether the redirection failure of the terminal device 10 satisfies the inhibition condition of "the number of times of the redirection failure occurring in one minute reaches three" is determined. In a case that the foregoing inhibition condition is satisfied, S908 is performed. In a case that the foregoing inhibition condition is not satisfied, S903 is performed again. In a case that the new redirection failure is detected to still be the first type, S905 is performed, to record occurring time and the number of times of the redirection failure. S906 is skipped. S907 is performed, to determine whether the redirection failure of the terminal device satisfies the inhibition condition of "the number of times of the redirection failure occurring in one minute reaches two". In a case that the inhibition condition of "the number of times of the redirection failure occurring in one minute reaches two" is satisfied, S908 is performed. In a case that the inhibition condition of "the number of times of the redirection failure occurring in one minute reaches two" is not satisfied, S903 is performed again.

S908: The terminal device is inhibited from being redirected from the first network to the second network according to the inhibition duration.

In an embodiment of the present application, in a case that the redirection failure is of the first type, the terminal device 10 inhibits, according to the inhibition duration of the first type, the terminal device 10 from being redirected from the first network 20 to the second network 30. In a case that the redirection failure is of the second type, the terminal device 10 inhibits, according to the inhibition duration of the second type, the terminal device 10 from being redirected from the first network 20 to the second network 30.

S909: When duration in which the terminal device is inhibited from being redirected from the first network to the second network reaches the inhibition duration, redirection inhibition on the terminal device is exited.

In an embodiment of the present application, in a case that the redirection failure is of the first type, when duration in which the terminal device 10 is inhibited from being redirected from the first network 20 to the second network 30 reaches the inhibition duration of the first type, redirection inhibition on the terminal device 10 is exited. In a case that the redirection failure is of the second type, when duration in which the terminal device 10 is inhibited from being redirected from the first network 20 to the second network 30 reaches the inhibition duration of the second type, redirection inhibition on the terminal device 10 is exited.

In a case that in aging duration after the terminal device 10 exits the redirection inhibition, the redirection failure of the terminal device 10 satisfies the inhibition condition again, redirection inhibition with another period of inhibition duration is performed on the terminal device 10, to strengthen strength of inhibiting the redirection of the terminal device 10, thereby improving network communication stability.

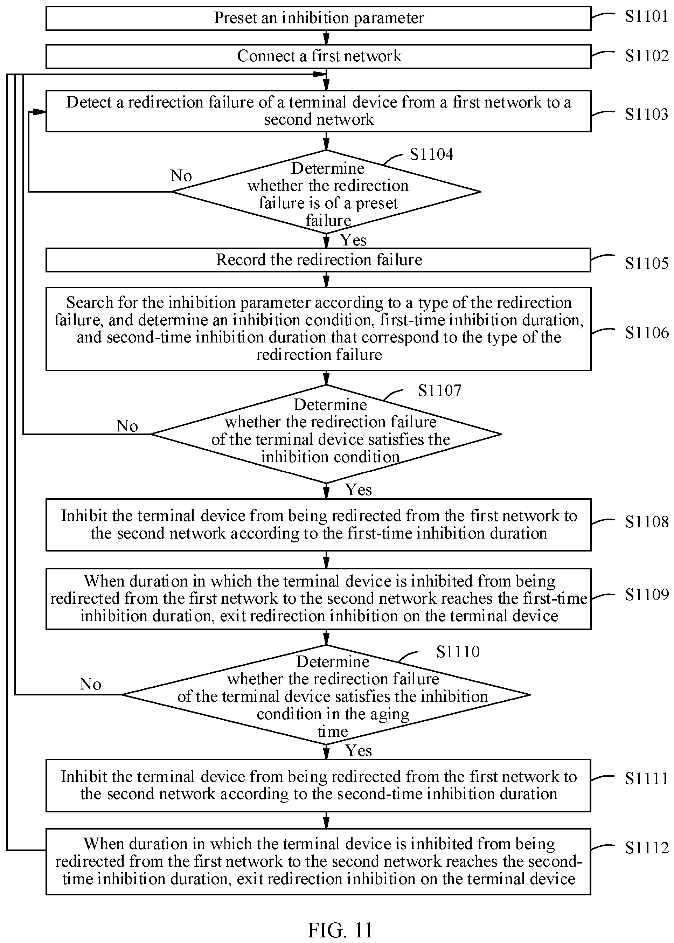

With reference to FIG. 11, a flowchart of a method for controlling a redirection according to an embodiment of the present application is shown. The method includes the following steps.

S1101: An inhibition parameter is preset.

In an embodiment of the present application, the inhibition parameter may be preset by presetting an inhibition parameter table. The inhibition parameter table includes a plurality of types of redirection failures, and an inhibition condition, first-time inhibition duration and second-time inhibition duration that correspond to each type of redirection failure.

S1102: A first network is connected.

S1103: A redirection failure of a terminal device from a first network to a second network is detected.

S1104: Whether the redirection failure is of a preset failure is determined. In an embodiment of the present application, in a case that the redirection failure is determined to be of the preset failure, S1105 is performed; and otherwise, in a case that the redirection failure is determined not to be of the preset failure, S1103 is performed.

S1105: The redirection failure is recorded.

S1106: The inhibition parameter is searched for according to a type of the redirection failure, and an inhibition condition, first-time inhibition duration, and second-time inhibition duration that correspond to the type of the redirection failure are determined.

S1107: Whether the redirection failure of the terminal device satisfies the inhibition condition is determined. In a case that the redirection failure satisfies the inhibition condition, S1108 is performed; and otherwise, in a case that the redirection failure does not satisfy the inhibition condition, S1103 is performed again.

S1108: The terminal device is inhibited from being redirected from the first network to the second network according to the first-time inhibition duration.

S1109: When duration in which the terminal device is inhibited from being redirected from the first network to the second network reaches the first-time inhibition duration, redirection inhibition on the terminal device is exited.

Reference may be made to description content of S901 to S909 in FIG. 9 for specific implementation content of S1101 to S1109 in the embodiment.

S1110: Whether the redirection failure of the terminal device satisfies the inhibition condition in aging duration is determined.

In a case that the redirection failure of the terminal device 10 in the aging duration satisfies the inhibition condition again, S1111 is performed; and otherwise, in a case that the redirection failure of the terminal device 10 in the aging duration does not satisfy the inhibition condition, S1103 is performed again.

S1111: The terminal device is inhibited from being redirected from the first network to the second network according to the second-time inhibition duration.

S1112: When duration in which the terminal device is inhibited from being redirected from the first network to the second network reaches the second-time inhibition duration, redirection inhibition on the terminal device is exited.

S1103 is performed after S1112.

In a case that in aging duration after the terminal device 10 exits the redirection inhibition, the redirection failure of the terminal device 10 satisfies the inhibition condition again, redirection inhibition with second-time inhibition duration is performed on the terminal device 10, to strengthen strength of inhibiting the redirection of the terminal device 10, thereby improving network communication stability. Reference may be made to description content of S513 to S515 in FIG. 5 for specific implementation content of S1110 to S1112 in the embodiment, and details are not described herein again.

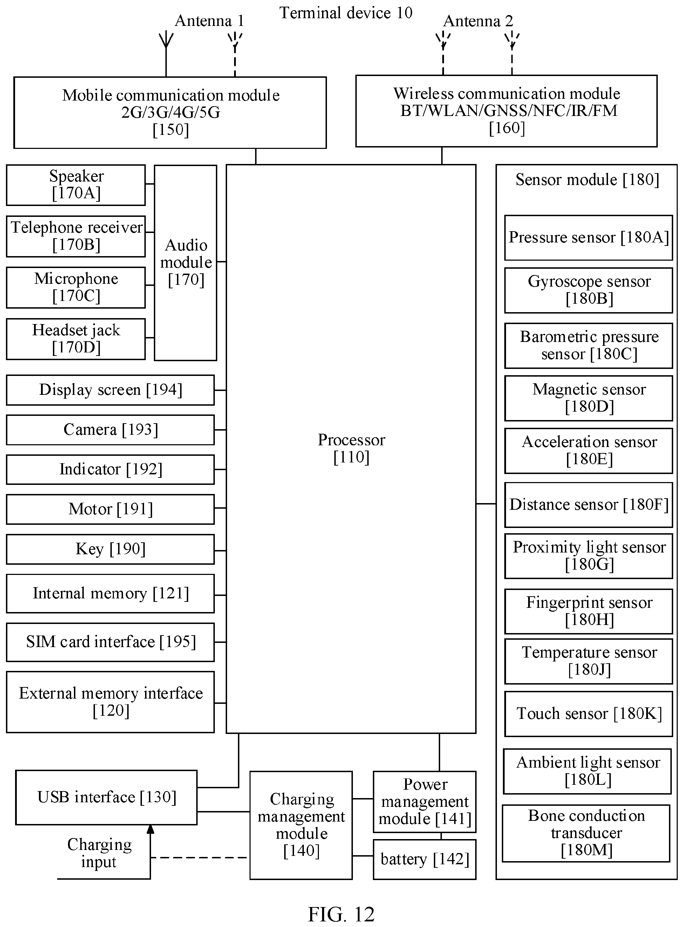

The terminal device 10 according to the embodiments of the present application is described below. With reference to FIG. 12, a schematic diagram of a hardware structure of a terminal device 10 according to an embodiment of the present application is shown.

In the present application, the terminal device 10 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the structure shown in the embodiment of the present application does not constitute a specific limitation on the terminal device 10. In some other embodiments of the present application, the terminal device 10 may include more or fewer components than those shown in the figure, or may combine some components or split some components, or have a different component arrangement. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time-sequence signal, and control obtaining and executing of instructions.

A memory may be further disposed in the processor 110, to store instructions and data. In some embodiments, the memory in the processor 110 is a cache. The memory may store instructions or data that are recently used or cyclically used by the processor 110. In a case that the processor 110 needs to use the instructions or data again, the processor may directly call the instructions or the data from the memory. Repeated access is avoided, and waiting time of the processor 110 is reduced, such that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/ or a universal serial bus (universal serial bus, USB) port.

It may be understood that an interface connection relationship between the modules illustrated in this embodiment of this application is merely an example for description, and does not constitute a limitation on a structure of the terminal device 10. In some other embodiments of the present application, the terminal device 10 may alternatively use an interface connection manner different from that in the foregoing embodiments, or use a combination of a plurality of interface connection manners.

The charging management module 140 is configured to receive charging input from a charger. The charger may be a wireless charger, or may be a wired charger. In some embodiments of wired charging, the charging management module 140 may receive charging input from the wired charger via the USB interface 130. In some embodiments of wireless charging, the charging management module 140 may receive wireless charging input via a wireless charging coil of the terminal device 10. When charging the battery 142, the charging management module 140 may further supply power to the terminal device 10 by using the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the display screen 194, the camera 193, the wireless communication module 160, and the like. The power management module 141 may further be configured to monitor parameters such as a battery capacity, a number of battery cycles, and a battery health state (power leakage and impedance). In some other embodiments, the power management module 141 may alternatively be disposed in the processor 110. In some other embodiments, the power management module 141 and the charging management module 140 may alternatively be disposed in a same device.

A wireless communication function of the terminal device 10 may be implemented via the antenna 1, the antenna 2, the mobile communication module 150, the wireless communication module 160, the modem processor, the baseband processor, etc.

The antenna 1 and the antenna 2 are configured to transmit and receive an electromagnetic wave signal. Each antenna in the terminal device 10 may be configured to cover a single communication frequency band or a plurality of communication frequency bands. Different antennas may be further multiplexed to increase a utilization rate of the antennas. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 10. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal obtained after modulation by the modem processor, and the amplified signal is converted into an electromagnetic wave via the antenna 1 for radiation. In some embodiments, at least some function modules of the mobile communication module 150 may be arranged in the processor 110. In some embodiments, at least some of the functional modules of the mobile communication module 150 may be arranged in a same device as at least some of the modules of the processor 110.

The modem processor may include a modulator and a demodulator. The modulator is configured to modulate a to-be-transmitted low-frequency baseband signal into a medium or high-frequency signal. The demodulator is configured to demodulate the received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the telephone receiver 170B, and the like), or displays an image or a video by using the display screen 194. In some embodiments, the modem processor may be an independent device. In some other embodiments, the modem processor may be independent of the processor 110 and may be disposed in a same device as the mobile communication module 150 or another functional module.

The wireless communication module 160 may provide a wireless communication solution that is applied to the terminal device 10 and that includes a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices into which at least one communication processing module is integrated. The wireless communication module 160 receives an electromagnetic wave through the antenna 2, performs frequency modulation and filtering on the electromagnetic wave signal, and transmits the processed signal to the processor 110. The wireless communication module 160 may further receive a to-be-transmitted signal from the processor 110, perform frequency modulation and amplification on the to-be-transmitted signal, and then convert the signal into an electromagnetic wave for radiation through the antenna 2.

In some embodiments, in the terminal device 10, the antenna 1 and the mobile communication module 150 are coupled, and the antenna 2 and the wireless communication module 160 are coupled, such that the terminal device 10 can communicate with a network and other devices by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and/or an IR technology. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The terminal device 10 implements a display function by using the GPU, the display screen 194, the application processor, and the like. The GPU is a microprocessor for image processing and is connected to the display screen 194 and the application processor. The GPU is configured to perform mathematical and geometric calculation, and is configured to perform graphics rendering. The processor 110 may include one or more GPUs, which execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Miniled, a Microled, a Micro-oled, a quantum dot light emitting diode (quantum dot light emitting diode, QLED), and the like. In some embodiments, the terminal device 10 may include one or N display screens 194, where N is a positive integer greater than 1.

The terminal device 10 may implement a photographing function by using the ISP, the camera 193, the video codec, the GPU, the display screen 194, the application processor, and the like.

The ISP is configured to process data fed back by the camera 193. For example, during photographing, a shutter is opened. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on a noise point, brightness, and a skin tone of the image. The ISP may further optimize parameters such as exposure and a color temperature of a to-be-photographed scene. In some embodiments, the ISP may be arranged in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, and the ISP converts the electrical signal into a digital image signal. The ISP outputs the digital image signal to the DSP for processing. The DSP converts the digital image signal into an image signal in a standard form, for example, RGB or YUV. In some embodiments, the terminal device 10 may include one or N cameras 193, where N is a positive integer greater than 1.

The digital signal processor is configured to process a digital signal. In addition to a digital image signal, the digital signal processor may further process other digital signals. For example, when the terminal device 10 performs frequency point selection, the digital signal processor is configured to perform Fourier transformation and the like on frequency point energy.

The video codec is configured to compress or decompress a digital video. The terminal device 10 can support one or more video codecs. In this way, the terminal device 10 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, which quickly processes input information by learning from a structure of a biological neural network, for example, a mode of transmission between neurons in a human brain, and may further continuously perform self-learning. The NPU may implement an application such as intelligent cognition of the terminal device 10, for example, image recognition, face recognition, speech recognition, and text understanding.

The internal memory 121 may include one or more random access memories (random access memory, RAM), and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM generally referred to as a DDR5 SDRAM), and the like.

The non-volatile memory may include a disk storage device and a flash memory (flash memory).

According to an operating principle, the flash memory may be classified into NOR FLASH, NAND FLASH, 3D NAND FLASH, and the like. According to potential orders of storage cells, the flash memory may be classified into a single-level storage cell (single-level cell, SLC), a multi-level cell (multi-level cell, MLC), a triple-level cell (triple-level cell, TLC), a quad-level cell (quad-level cell, QLC), and the like. According to a storage specification, the flash memory may include a universal flash storage (universal flash storage, UFS), an embedded multimedia card (embedded multimedia card, eMMC), and the like.

The random access memory may be directly read and written by the processor 110, may be configured to store executable programs (for example, machine instructions) of an operating system or other running programs, or may be configured to store data of users and applications.

The non-volatile memory may also store executable programs, data of users and applications, and the like, and may be loaded into the random access memory in advance for the processor 110 to perform direct reading and writing.

The external memory interface 120 may be configured to be connected to an external non-volatile memory, to expand a storage capability of the terminal device 10. The external non-volatile memory communicates with the processor 110 via the external memory interface 120, to implement a data storage function. For example, a file such as music or a video is stored in the external non-volatile memory.

The internal memory 121 or the external memory interface 120 is configured to store one or more computer programs. The one or more computer programs are configured to be executed by the processor 110. The one or more computer programs include a plurality of instructions. When the plurality of instructions are executed by the processor 110, the method for controlling a redirection may be implemented by the terminal device 10 in the above embodiments, to implement redirection control of the terminal device 10.

The terminal device 10 may implement audio functions by using the audio module 170, the speaker 170A, the telephone receiver 170B, the microphone 170C, the headset jack 170D, the application processor, and the like. For example, the machine of music playback and recording may be implemented.

The audio module 170 is configured to convert digital audio information into analog audio signal for output, and is also configured to convert analog audio input into a digital audio signal. The audio module 170 may be further configured to encode and decode an audio signal. In some embodiments, the audio module 170 may be arranged in the processor 110, or some functional modules of the audio module 170 are arranged in the processor 110.

The speaker 170A, also referred to as a "horn", is configured to convert an electrical audio signal into a sound signal. Music can be listened to or a hands-free call can be answered by using the speaker 170A in the terminal device 10.

The telephone receiver 170B, also referred to as an "earpiece", is configured to convert an electrical audio signal into a sound signal. When a call is answered or audio information is listened to by the terminal device 10, the telephone receiver 170B may be put close to a human ear to listen to a voice.

The microphone 170C, also referred to as a "mic" and a "mike", is configured to convert a sound signal into an electrical signal. When making a call or sending voice information, a user may make a sound when a mouth of the user approaches the microphone 170C, to input a sound signal into the microphone 170C. At least one microphone 170C may be disposed in the terminal device 10. In some other embodiments, two microphones 170C may be arranged in the terminal device 10, to collect a sound signal and implement a noise reduction function. In some other embodiments, three, four, or more microphones 170C may be alternatively arranged in the terminal device 10, to collect a sound signal, implement noise reduction, recognize a sound source, implement a directional recording function, and the like.

The headset jack 170D is configured to be connected to a wired headset. The headset jack 170D may be the USB interface 130, or may be a 3.5 mm open mobile terminal 10 platform (open mobile terminal platform, OMTP) standard interface, or a cellular telecommunications industry association of the USA (cellular telecommunications industry association of the USA, CTIA) standard interface.

Certainly, the electronic device may further include one or more components such as a key 190, a motor 191, an indicator 192, and a SIM card interface 195. This is not limited in the embodiment of the present application.

The embodiments of the present application further provide a computer storage medium. The computer storage medium stores computer instructions. When the computer instructions are run on the terminal device 10, the terminal device 10 is enabled to perform the foregoing related method steps, to implement the method for controlling a redirection in the foregoing embodiments.

The embodiments further provide a computer program product. When the computer program product runs on a computer, the computer is enabled to perform the foregoing related steps to implement the method for controlling a redirection in the foregoing embodiments.

In addition, an embodiment of the present application further provides an apparatus. The apparatus may be specifically a chip, a component, or a module. The apparatus may include a processor and a memory that are connected. The memory is configured to store computer executable instructions. When the apparatus runs, the processor may perform the computer executable instructions stored in the memory, such that the chip is enabled to perform the method for controlling a redirection in the foregoing method embodiments.

The terminal device 10, the computer storage medium, the computer program product, or the chip provided in the embodiments may be configured to perform the corresponding method provided above. Thus for beneficial effects that can be achieved, reference may be made to the beneficial effects of the corresponding method provided above. Details are not described herein again.

Based on the foregoing descriptions of the implementations, a person skilled in the art may clearly understand that for convenience and ease of description, division of the foregoing function modules is merely used as an instance for illustration. In actual application, the foregoing functions can be allocated to and implemented by different function modules based on needs. To be specific, an inner structure of an apparatus is divided into different function modules to implement all or some of the functions described above.

In the several embodiments provided in the present application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing implementations are merely used for describing the technical solutions of the present application, but not for limiting the technical solutions of the present application. Although the present application is described in detail with reference to the preferred implementations, a person of ordinary skill in the art should understand that modifications or equivalent replacements may be made to the technical solutions of the present application without departing from the spirit and scope of the technical solutions of the present application.

## Claims

1. A method for controlling a redirection, comprising:
accessing, by a terminal device, a first network;
when the terminal device runs a first application, in a case of detecting that a number of times of a redirection failure of the terminal device from the first network to a second network reaches a first threshold, inhibiting, in first inhibition duration, the terminal device from being redirected from the first network to the second network; and
when the terminal device runs a second application, in a case of detecting that the number of times of the redirection failure of the terminal device from the first network to the second network reaches a second threshold, inhibiting, in second inhibition duration, the terminal device from being redirected from the first network to the second network, wherein
sensitivity of the first application to latency is higher than that of the second application to latency, the first inhibition duration is greater than the second inhibition duration, and the first threshold is the same as the second threshold or not.

2. The method for controlling a redirection according to claim 1, wherein in a case that the redirection failure of the terminal device from the first network to the second network is detected, the method further comprises:
recording the number of times of the redirection failure in a case that the redirection failure is determined to be of a preset type; and
continuing to detect a redirection failure of the terminal device from the first network to the second network in a case of determining that the redirection failure is not of the preset type.

3. The method for controlling a redirection according to claim 1, wherein when the terminal device runs the first application, the method further comprises:
determining a foreground application of the terminal device as the first application, and determining an inhibition condition and the first inhibition duration of the first application according to application information of the first application, wherein the inhibition condition of the first application is that the number of times of the redirection failure of the terminal device reaches the first threshold; and
when the terminal device runs the second application, the method further comprises:
determining a foreground application of the terminal device as the second application, and determining an inhibition condition and the second inhibition duration of the second application according to application information of the second application, wherein the inhibition condition of the second application is that the number of times of the redirection failure of the terminal device reaches the second threshold.

4. The method for controlling a redirection according to claim 3, wherein the determining an inhibition condition and the first inhibition duration of the first application according to application information of the first application comprises:
querying a preset inhibition parameter according to the application information of the first application, and determining the inhibition condition and the first inhibition duration of the first application; and
the determining an inhibition condition and the second inhibition duration of the second application according to application information of the second application comprises:
querying a preset inhibition parameter according to the application information of the second application, and determining the inhibition condition and the second inhibition duration of the second application.

5. The method for controlling a redirection according to claim 1, further comprising:
in a case of detecting that the number of times of the redirection failure of the terminal device from the first network to the second network does not reach the first threshold, continuing to detect a new redirection failure of the terminal device from the first network to the second network;
recording the number of times of the redirection failure in a case that the new redirection failure is determined to be of a preset type;
obtaining application information of a foreground application of the terminal device, to refresh the foreground application; and
in a case that the foreground application is the first application, and the number of times of the redirection failure of the terminal device reaches the first threshold, inhibiting, in the first inhibition duration, the terminal device from being redirected from the first network to the second network.

6. The method for controlling a redirection according to claim 5, wherein after the obtaining application information of a foreground application of the terminal device, to refresh the foreground application, the method further comprises:
determining an inhibition condition and the second inhibition duration of the second application in a case that the foreground application is the second application, wherein the inhibition condition of the second application is that the number of times of the redirection failure of the terminal device reaches the second threshold;
determining whether the redirection failure of the terminal device satisfies the inhibition condition of the second application;
in a case that the redirection failure of the terminal device satisfies the inhibition condition of the second application, inhibiting, in the second inhibition duration, the terminal device from being redirected from the first network to the second network; and
in a case that the redirection failure of the terminal device does not satisfy the inhibition condition of the second application, continuing to detect a new redirection failure of the terminal device from the first network to the second network.

7. The method for controlling a redirection according to claim 1, wherein
the inhibiting, in first inhibition duration, the terminal device from being redirected from the first network to the second network comprises:
disabling, in the first inhibition duration, a function of the terminal device for accessing the second network; and
the inhibiting, in second inhibition duration, the terminal device from being redirected from the first network to the second network comprises:
disabling, in the second inhibition duration, the function of the terminal device for accessing the second network.

8. The method for controlling a redirection according to claim 1, wherein
the inhibiting, in first inhibition duration, the terminal device from being redirected from the first network to the second network comprises:
lowering, in the first inhibition duration, a priority of accessing the second network, such that a priority of accessing the first network is higher than the priority of accessing the second network; and
the inhibiting, in second inhibition duration, the terminal device from being redirected from the first network to the second network comprises:
lowering, in the second inhibition duration, the priority of accessing the second network, such that the priority of accessing the first network is higher than the priority of accessing the second network.

9. The method for controlling a redirection according to claim 1, further comprising:
when the terminal device runs the first application, in a case that duration in which the terminal device is inhibited from being redirected from the first network to the second network reaches the first inhibition duration, exiting redirection inhibition on the terminal device; and
when the terminal device runs the second application, in a case that duration in which the terminal device is inhibited from being redirected from the first network to the second network reaches the second inhibition duration, exiting redirection inhibition on the terminal device.

10. The method for controlling a redirection according to claim 9, wherein after the exiting redirection inhibition on the terminal device, the method further comprises:
when the terminal device runs the first application,
in a case of detecting, in first aging duration, that the number of times of the redirection failure of the terminal device from the first network to the second network reaches the first threshold, inhibiting the terminal device from being redirected from the first network to the second network according to third inhibition duration;
when duration in which the terminal device is inhibited from being redirected from the first network to the second network reaches the third inhibition duration, exiting redirection inhibition on the terminal device;
when the terminal device runs the second application,
in a case of detecting, in second aging duration, that the number of times of the redirection failure of the terminal device from the first network to the second network reaches the second threshold, inhibiting the terminal device from being redirected from the first network to the second network according to fourth inhibition duration; and
when duration in which the terminal device is inhibited from being redirected from the first network to the second network reaches the fourth inhibition duration, exiting redirection inhibition on the terminal device, wherein
the third inhibition duration is greater than the first inhibition duration, and the fourth inhibition duration is greater than the second inhibition duration.

11. The method for controlling a redirection according to claim 9, wherein the exiting redirection inhibition on the terminal device comprises:
restoring a function of the terminal device for accessing the second network; and alternatively,
increasing a priority of accessing the second network, such that a priority of accessing the first network is higher than the priority of accessing the second network.

12. The method for controlling a redirection according to claim 9, wherein after the exiting redirection inhibition on the terminal device, the method further comprises:
clearing the recorded number of times of the redirection failure.

13. The method for controlling a redirection according to claim 1, further comprising:
loading inhibition parameters during startup of the terminal device, wherein the inhibition parameters comprise mapping relationships between different application information, an inhibition condition, and inhibition duration, and the inhibition condition comprises a threshold number of times of the redirection failure of the terminal device.

14. A terminal device, comprising a processor and a memory, wherein the processor is connected to the memory;
the memory is configured to store program instructions; and
the processor is configured to read the program instructions stored in the memory, to implement the method for controlling a redirection according to any one of claims 1 to 13.

15. A computer-readable storage medium, storing program instructions, wherein when the program instructions are run on an electronic device, the electronic device is enabled to perform the method for controlling a redirection according to any one of claims 1 to 13.

16. A method for controlling a redirection, applied to a terminal device, comprising:
loading inhibition parameters during startup of the terminal device, wherein the inhibition parameters comprise mapping relationships between different application information, an inhibition condition, and inhibition duration, and the inhibition condition comprises a threshold number of times of a redirection failure of the terminal device;
accessing a first network;
when the terminal device runs a first application, in a case of detecting that a number of times of a redirection failure of the terminal device from the first network to a second network reaches a first threshold, inhibiting, in first inhibition duration, the terminal device from being redirected from the first network to the second network; and
when the terminal device runs a second application, in a case of detecting that the number of times of the redirection failure of the terminal device from the first network to the second network reaches a second threshold, inhibiting, in second inhibition duration, the terminal device from being redirected from the first network to the second network, wherein
sensitivity of the first application to latency is higher than that of the second application to latency, the first inhibition duration is greater than the second inhibition duration, and the first threshold is the same as the second threshold or not.

17. The method for controlling a redirection according to claim 16, wherein in a case that the redirection failure of the terminal device from the first network to the second network is detected, the method further comprises:
recording the number of times of the redirection failure in a case that the redirection failure is determined to be of a preset type; and
continuing to detect a redirection failure of the terminal device from the first network to the second network in a case of determining that the redirection failure is not of the preset type.

18. The method for controlling a redirection according to claim 16, wherein when the terminal device runs the first application, the method further comprises:
determining a foreground application of the terminal device as the first application, and determining an inhibition condition and the first inhibition duration of the first application according to application information of the first application, wherein the inhibition condition of the first application is that the number of times of the redirection failure of the terminal device reaches the first threshold; and
when the terminal device runs the second application, the method further comprises:
determining a foreground application of the terminal device as the second application, and determining an inhibition condition and the second inhibition duration of the second application according to application information of the second application, wherein the inhibition condition of the second application is that the number of times of the redirection failure of the terminal device reaches the second threshold.

19. The method for controlling a redirection according to claim 18, wherein the determining an inhibition condition and the first inhibition duration of the first application according to application information of the first application comprises:
querying a preset inhibition parameter according to the application information of the first application, and determining the inhibition condition and the first inhibition duration of the first application; and
the determining an inhibition condition and the second inhibition duration of the second application according to application information of the second application comprises:
querying a preset inhibition parameter according to the application information of the second application, and determining the inhibition condition and the second inhibition duration of the second application.

20. The method for controlling a redirection according to claim 16, further comprising:
in a case of detecting that the number of times of the redirection failure of the terminal device from the first network to the second network does not reach the first threshold, continuing to detect a new redirection failure of the terminal device from the first network to the second network;
recording the number of times of the redirection failure in a case that the new redirection failure is determined to be of a preset type;
obtaining application information of a foreground application of the terminal device, to refresh the foreground application; and
in a case that the foreground application is the first application, and the number of times of the redirection failure of the terminal device reaches the first threshold, inhibiting, in the first inhibition duration, the terminal device from being redirected from the first network to the second network.

21. The method for controlling a redirection according to claim 20, wherein after the obtaining application information of a foreground application of the terminal device, to refresh the foreground application, the method further comprises:
determining an inhibition condition and the second inhibition duration of the second application in a case that the foreground application is the second application, wherein the inhibition condition of the second application is that the number of times of the redirection failure of the terminal device reaches the second threshold;
determining whether the redirection failure of the terminal device satisfies the inhibition condition of the second application;
in a case that the redirection failure of the terminal device satisfies the inhibition condition of the second application, inhibiting, in the second inhibition duration, the terminal device from being redirected from the first network to the second network; and
in a case that the redirection failure of the terminal device does not satisfy the inhibition condition of the second application, continuing to detect a new redirection failure of the terminal device from the first network to the second network.

22. The method for controlling a redirection according to claim 16, wherein
the inhibiting, in first inhibition duration, the terminal device from being redirected from the first network to the second network comprises:
disabling, in the first inhibition duration, a function of the terminal device for accessing the second network; and
the inhibiting, in second inhibition duration, the terminal device from being redirected from the first network to the second network comprises:
disabling, in the second inhibition duration, the function of the terminal device for accessing the second network.

23. The method for controlling a redirection according to claim 16, wherein
the inhibiting, in first inhibition duration, the terminal device from being redirected from the first network to the second network comprises:
lowering, in the first inhibition duration, a priority of accessing the second network, such that a priority of accessing the first network is higher than the priority of accessing the second network; and
the inhibiting, in second inhibition duration, the terminal device from being redirected from the first network to the second network comprises:
lowering, in the second inhibition duration, the priority of accessing the second network, such that the priority of accessing the first network is higher than the priority of accessing the second network.

24. The method for controlling a redirection according to claim 16, further comprising:
when the terminal device runs the first application, in a case that duration in which the terminal device is inhibited from being redirected from the first network to the second network reaches the first inhibition duration, exiting redirection inhibition on the terminal device; and
when the terminal device runs the second application, in a case that duration in which the terminal device is inhibited from being redirected from the first network to the second network reaches the second inhibition duration, exiting redirection inhibition on the terminal device.

25. The method for controlling a redirection according to claim 24, wherein after the exiting redirection inhibition on the terminal device, the method further comprises:
when the terminal device runs the first application,
in a case of detecting, in first aging duration, that the number of times of the redirection failure of the terminal device from the first network to the second network reaches the first threshold, inhibiting the terminal device from being redirected from the first network to the second network according to third inhibition duration;
when duration in which the terminal device is inhibited from being redirected from the first network to the second network reaches the third inhibition duration, exiting redirection inhibition on the terminal device;
when the terminal device runs the second application,
in a case of detecting, in second aging duration, that the number of times of the redirection failure of the terminal device from the first network to the second network reaches the second threshold, inhibiting the terminal device from being redirected from the first network to the second network according to fourth inhibition duration; and
when duration in which the terminal device is inhibited from being redirected from the first network to the second network reaches the fourth inhibition duration, exiting redirection inhibition on the terminal device, wherein
the third inhibition duration is greater than the first inhibition duration, and the fourth inhibition duration is greater than the second inhibition duration.

26. The method for controlling a redirection according to claim 24, wherein the exiting redirection inhibition on the terminal device comprises:
restoring a function of the terminal device for accessing the second network; and alternatively,
increasing a priority of accessing the second network, such that a priority of accessing the first network is higher than the priority of accessing the second network.

27. The method for controlling a redirection according to claim 24, wherein after the exiting redirection inhibition on the terminal device, the method further comprises:
clearing the recorded number of times of the redirection failure.
